(19)

**Europäisches Patentamt**
**European Patent Office**
**Office européen des brevets**

(11) **EP 3 343 493 A1**

(12) **EUROPEAN PATENT APPLICATION**

(43) Date of publication:
**04.07.2018 Bulletin 2018/27**

(51) Int Cl.:
**G06Q 30/06** *(2012.01)*

(21) Application number: **17196274.9**

(22) Date of filing: **13.10.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **28.12.2016 JP 2016256083**

(71) Applicant: **Media Do Holdings Co., Ltd.**
**Tokyo 100-0003 (JP)**

(72) Inventor: **FUJITA, Yasushi**
**Tokyo, 100-0003 (JP)**

(74) Representative: **dompatent von Kreisler Selting Werner -**
**Partnerschaft von Patent- und Rechtsanwälten mbB**
**Deichmannhaus am Dom**
**Bahnhofsvorplatz 1**
**50667 Köln (DE)**

(54) **ELECTRONIC CONTENT DISTRIBUTION SYSTEM**

(57) In an electronic content distribution system, a resale management server device, sales server devices that provide electronic content sales sites, user terminal devices to be used by users can communicate via a network or networks. The resale management server device includes a price setting unit that determines a first coefficient in accordance with a market circulation quantity and a resale stock quantity of electronic content, and calculates a purchase price and a resale price, using the first coefficient.

FIG.1

## Description

BACKGROUND

Technical Field

The present invention relates to an electronic content distribution system that manages distribution of electronic content, such as electronic books, moving image files, and music files, and more particularly, to a system that can manage resale of electronic content.

Related Art

Conventionally, various kinds of content, such as books, movies, and music, are sold via physical media. For example, books are printed on paper in the form of paper books, movies are recorded on media such as digital versatile discs (DVDs) or Blu-ray (registered trade mark) discs (BDs), music is recorded on media such as Compact Discs (CDs), and game software is recorded on optical media such as DVDs, BDs, or CDs, or on special cartridges. In this manner, content is recorded on suitable physical media, and is sold.

Meanwhile, terminal devices such as personal computers, personal digital assistant (PDA) terminals, and portable telephone devices have become common and sophisticated. In this trend, electronic content that does not involve any of the above-mentioned physical media is now widely sold. For example, books in the form of electronic books are provided as document data in a file format such as EPUB files or PDF files, movies are provided as moving image data in a file format such as MP4 files, music is provided as audio data in a file format such as MP3 files or MP4 files, game software is provided in files in which the game software can be executed. In this manner, the respective kinds of content in files in suitable formats are provided to users.

As described above, distribution of electronic content enables users to buy and use the content in a simpler manner. Also, electronic content does not require transportation of physical media, and the distribution costs can be lowered accordingly. Electronic content has other various advantages. However, as electronic data that does not involve physical media is sold, content is copied without a permission from the author of the content (or a distribution manager such as a publishing company), and the copies are provided at low prices or even free. This lowers the value of the content. Such a problem occurs more often with electronic data than with physical media, and therefore, electronic data has been considered risky.

Meanwhile, resale markets are formed in markets for content sold via conventional physical media. Specifically, after reading or viewing content, the owner who bought a new physical medium having the content recorded thereon resells the physical medium to a third party directly or via a business operator that buys and sells remarketed products. In this manner, the content is put into secondary distribution.

In recent years, for content to be provided as electronic content to users, systems or the like for secondary distribution of content have been studied. In such a system, like content recorded on physical media, electronic content is resold between users or to a third party through a business operator that buys and sells remarketed products.

In a case where electronic content is put on a secondary distribution market, the above-mentioned risk of unauthorized copying of electronic content is even greater. Therefore, various methods for avoiding such risk and actively distributing electronic content in a secondary distribution market have been disclosed.

For example, JP 2014-517972 A discloses a system that resells content items and additional functions of applications such as games. When a user resells content to another user, this system removes the content from the terminal device of the user who has sold the content, and thus prevents a situation where the circulation quantity of the content keeps increasing despite the intention of the distributor or the like.

JP 2013-532329 A discloses a system that can manage a secondary distribution market for digital items, and lend or resell a digital item from a user to another user.

JP 2014-120069 A discloses a system that buys and sells content as remarketed products. In a case where content is allowed to be stored in more than one terminal owned by one user, when the user sells the content, this system removes the content from all the terminals owned by the user, and thus prevents a situation where the user who has sold the content keeps using the content after the sale.

JP 2013-8165 A discloses an electronic book sales system. When the user sells an electronic book as a remarketed product, the system invalidates the user's license key corresponding to the electronic book, and thus prevents a situation where the user who has sold the content keeps using the content after the sale.

SUMMARY

In a secondary distribution market for content recorded on conventional physical media, remarketed products are bought and sold between users, or a shop or a business operator that buys and sells remarketed products conducts trade-in of physical media from users and sells the physical media to another user. Therefore, unlike those at times of sales of first-marketed products, the authors of content and the managers of content, such as publishers, cannot manage and control circulation quantities and price fluctuations in a detailed manner. Also, unlike those at times of sales of first-marketed products, the authors of content and the publishers that manage content are not paid the copyright fees.

Further, in many cases, remarketed products are sold through direct transactions among users or through stock management at each shop or each business operator that buys and sells remarketed products. Stock management is conducted by each shop or each business operator or the like. Therefore, a user who wishes to buy a remarketed product has to check availability at many shops to detect the desired remarketed content in stock.

As for prices in purchases and sales of remarketed products, such prices are set by respective shops and business operators . In many cases, the value of content varies depending on time or the like, and it is not easy to set an appropriate purchase/sales price every time.

In a secondary distribution market for electronic content, the same problems as those with a secondary distribution market for physical media might occur.

When a user sells electronic content, the systems disclosed in JP 2014-517972 A, JP 2013-532329 A, and JP 2013-8165 A can prevent a continuous increase in the market circulation quantity of the electronic content by deleting the electronic content from the user's terminal or invalidating the license key associated with the user. However, those systems cannot take measures to adjust the circulation quantity in a detailed manner and prevent a sharp decrease in the market value.

Also, in any of the systems disclosed in JP 2014-517972 A, JP 2013-532329 A, JP 2014-120069 A, and JP 2013-8165 A, direct transactions are conducted among users, and resale of remarketed stock being managed in a single system is conducted. Therefore, stock management is conducted by the respective shops and the respective business operators as described above, and it should be difficult for a user who wishes a remarketed product buying to search for the desired product in stock.

Therefore, the present invention aims to solve the above problems, and provide an electronic content distribution system that can benefit both a content provider such as an author or a publisher, and a user who wishes to buy electronic content as a first-marketed or remarketed product and sell the electronic content.

To solve the above problems, an electronic content distribution system according to the present invention includes: an electronic content management server device; a resale management server device; a plurality of sales server devices each configured to provide a sales site for electronic content; and a plurality of user terminal devices to be used by a plurality of users, wherein the electronic content management server device, the resale management server device, the sales server devices, and the user terminal devices are capable of communication via at least one network, the electronic content management server device includes:

an electronic content storage unit configured to store electronic content;

a delivery permission storage unit configured to store at least a set of information for identifying the electronic content and information for identifying the sales site permitted to deliver the electronic content, the set of information being stored as a delivery permission given to the sales site for the electronic content;

a buying history storage unit configured to store a buying history of a user buying the electronic content from the sales site;

an inventory list synchronization/delivery unit configured to provide a sales server device of the electronic content distribution system with an inventory list in accordance with the delivery permission, the inventory list being a list of the electronic content available for the user from the sales site;

a buying history management unit configured to create the buying history when there is a buying request from a user terminal device of the electronic content distribution system to the sales server device for the electronic content, and update the buying history when a process is performed to purchase the electronic content from the user; and

an electronic content delivery unit configured to deliver the electronic content to the user terminal device in accordance with the buying history when there is a delivery request from the user terminal device for the electronic content,

the resale management server device includes:

a resale management information storage unit configured to store information for managing a purchase of the electronic content from the user, and resale of the electronic content to another user;

a price setting information storage unit configured to store information for determining availability of the electronic content to be purchased from the user and a purchase price, and determining availability of the electronic content to be resold to the another user and a resale price;

a price setting unit configured to determine availability of the electronic content to be purchased from the user and a purchase price, and determine availability of the electronic content to be resold to the another user and a resale price;

a purchase processing unit configured to perform a process to purchase the electronic content from the user in accordance with the availability of the electronic content to be purchased from the user and the purchase price determined by the price setting unit; and

a resale processing unit configured to perform a process to resell the electronic content to the another user in accordance with the availability of the electronic content to be resold to the another user and the resale price determined by the price setting unit,

the resale management information storage unit includes:

a resale history storage unit configured to store a history of resale of the electronic content to the another user; and
a resale stock quantity storage unit configured to store a resale stock quantity of the electronic content purchased from the user,

the price setting information storage unit includes:

a purchase condition storage unit configured to store a purchase base price of each piece of the electronic content;
a resale condition storage unit configured to store a resale base price of each piece of the electronic content; and
a first coefficient storage unit configured to store a correspondence relationship between a market circulation quantity and the resale stock quantity of the electronic content, and a first coefficient, and

the price setting unit

calculates the market circulation quantity from the information stored in the buying history storage unit and the resale history storage unit,
determines the first coefficient from the market circulation quantity, the resale stock quantity, and the information stored in the first coefficient storage unit,
calculates the purchase price, using the purchase base price and the first coefficient, and
calculates the resale price, using the resale base price and the first coefficient.

As more than one sales site is provided as above, each electronic content provider can maintain a large number of marketing channels. Accordingly, each user can buy electronic content in various forms from the respective sales sites . Also, the resale stock on the sales sites can be managed in an integrated by the resale management server device, and resale from any desired sales site can be conducted. Thus, each electronic content provider can easily recognize the remarketed product circulation quantities, and each user can conduct a remarketed product buying without checking the stock on each sales site. Further, as the price setting unit calculates a purchase/resale price of electronic content, an appropriate price can be set in accordance with the distribution status in the market.
In a preferred embodiment of the present invention, the price setting information storage unit includes:

a second coefficient storage unit configured to store a correspondence relationship between market states and a second coefficient, the market states including the number of days elapsed since a date of release of the electronic content, a cumulative first-marketed product circulation quantity indicating a quantity of the electronic content sold as a first-marketed product from the date of release of the electronic content till the current time, a latest first-marketed product circulation quantity indicating a quantity of the electronic content sold as a first-marketed product from a predetermined point of time till the current time, and a latest remarketed product circulation quantity indicating a quantity of the electronic content resold from a predetermined point of time till the current time; and
a third coefficient storage unit configured to store a correspondence relationship between the market states and a third coefficient, and

the price setting unit

calculates the market states from the information stored in the electronic content storage unit, the buying history storage unit, and the resale history storage unit,
determines the second coefficient from the market states and the information stored in the second coefficient storage unit,
calculates the purchase price, using the purchase base price, the first coefficient, and the second coefficient,
determines the third coefficient from the market states and the information stored in the third coefficient storage unit, and
calculates the resale price, using the resale base price, the first coefficient, and the third coefficient.

As different coefficients are used in calculating a purchase price of electronic content and calculating a resale price of the electronic content, more appropriate prices can be set in accordance with the circulation status of the electronic content in the market.
In a preferred embodiment of the present invention, the purchase condition storage unit stores an upper limit purchase price and a lower limit purchase price of each piece of the electronic content,
the resale condition storage unit stores an upper limit resale price and a lower limit resale price of each of the electronic content, and
the price setting unit

employs the upper limit purchase price as the purchase price when the calculated purchase price is equal to or higher than the upper limit purchase price,
employs the lower limit purchase price as the purchase price when the calculated purchase price is equal to or lower than the lower limit purchase price,
employs the upper limit resale price as the resale price when the calculated resale price is equal to or higher than the upper limit resale price, and
employs the lower limit resale price as the resale price when the calculated resale price is equal to or lower than the lower limit resale price.

As the upper and lower limit purchase prices and the upper and lower limit resale prices are set, unexpectedly high prices or unexpectedly low prices can be avoided while prices are automatically calculated.

An electronic content purchase price determination method according to the present invention is a method of determining a purchase price of electronic content in an electronic content distribution system that conducts first-marketing of the electronic content to a user, conducts a purchase of the electronic content as resale stock from the user, and conducts remarketing of the resale stock to another user, the method including:

a step of calculating a market circulation quantity of the electronic content by referring to a buying history storage unit configured to store a history of the first-marketing, and a resale history storage unit configured to store a history of the remarketing;

a step of acquiring a resale stock quantity of the electronic content by referring to a resale stock quantity storage unit configured to store a quantity of the resale stock;

a step of determining a first coefficient in accordance with the market circulation quantity and the resale stock quantity, by referring to a first coefficient storage unit configured to store a correspondence relationship between the market circulation quantity and the resale stock quantity, and the first coefficient;

a step of acquiring a purchase base price of the electronic content by referring to a purchase condition storage unit configured to store a purchase base price of each piece of the electronic content; and

a step of calculating a purchase price of the electronic content, using the purchase base price and the first coefficient.

A preferred embodiment of the electronic content purchase price determination method according to the present invention further includes:

a step of calculating market states by referring to information stored in an electronic content information storage unit configured to store information including a date of release of the electronic content, the buying history storage unit, and the resale history storage unit, the market states including the number of days elapsed since the date of release of the electronic content, a cumulative first-marketed product circulation quantity indicating a quantity of the electronic content sold as a first-marketed product from the date of release of the electronic content till the current time, a latest first-marketed product circulation quantity indicating a quantity of the electronic content sold as a first-marketed product from a predetermined point of time till the current time, and a latest remarketed product circulation quantity indicating a quantity of the electronic content resold from a predetermined point of time till the current time;

a step of determining a second coefficient by referring to a second coefficient storage unit configured to store a correspondence relationship between the market states and the second coefficient; and

a step of calculating the purchase price, using the purchase base price, the first coefficient, and the second coefficient.

In a preferred embodiment of the electronic content purchase price determination method according to the present invention,

the purchase condition storage unit stores an upper limit purchase price and a lower limit purchase price of each piece of the electronic content,

when the purchase price calculated from the purchase base price and the first coefficient is equal to or higher than the upper limit purchase price, the upper limit purchase price is employed as the purchase price, and

when the purchase price calculated from the purchase base price and the first coefficient is equal to or lower than the lower limit purchase price, the lower limit purchase price is employed as the purchase price.

An electronic content resale price determination method according to the present invention is a method of determining a resale price of electronic content in an electronic content distribution system that conducts first-marketing of the electronic content to a user, conducts a purchase of the electronic content as resale stock from the user, and conducts remarketing of the resale stock to another user, the method including:

a step of calculating a market circulation quantity of the electronic content by referring to a buying history storage unit configured to store a history of the first-marketing, and a resale history storage unit configured to store a history of the remarketing;

a step of acquiring a resale stock quantity of the electronic content by referring to a resale stock quantity storage unit configured to store a quantity of the resale stock;

a step of determining a first coefficient in accordance with the market circulation quantity and the resale stock quantity, by referring to a first coefficient storage unit configured to store a correspondence relationship between the market circulation quantity and the resale stock quantity, and the first coefficient;

a step of acquiring a resale base price of the electronic content by referring to a resale condition storage unit configured to store a resale base price of each piece of the electronic content; and

a step of calculating a resale price of the electronic content, using the resale base price and the first coefficient.

A preferred embodiment of the electronic content resale price determination method according to the present invention further includes:

a step of calculating market states by referring to information stored in an electronic content information storage unit configured to store information including a date of release of the electronic content, the buying history storage unit, and the resale history storage unit, the market states including the number of days elapsed since the date of release of the electronic content, a cumulative first-marketed product circulation quantity indicating a quantity of the electronic content sold as a first-marketed product from the date of release of the electronic content till the current time, a latest first-marketed product circulation quantity indicating a quantity of the electronic content sold as a first-marketed product from a predetermined point of time till the current time, and a latest remarketed product circulation quantity indicating a quantity of the electronic content resold from a predetermined point of time till the current time; a step of determining a third coefficient by referring to a third coefficient storage unit configured to store a correspondence relationship between the market states and the third coefficient; and a step of calculating the resale price, using the resale base price, the first coefficient, and the third coefficient.

In a preferred embodiment of the electronic content resale price determination method according to the present invention,
the resale condition storage unit stores an upper limit resale price and a lower limit resale price of each piece of the electronic content,
when the resale price calculated from the resale base price and the first coefficient is equal to or higher than the upper limit resale price, the upper limit resale price is employed as the resale price, and
when the resale price calculated from the resale base price and the first coefficient is equal to or lower than the lower limit resale price, the lower limit resale price is employed as the resale price.

An electronic content distribution system can manage first-marketing and remarketing of electronic content via sales sites in an integrated and detailed manner, and automatically set prices of the electronic content. Thus, it is possible to benefit both the content provider side and the user side.

BRIEF DESCRIPTION OF DRAWINGS

FIG. 1 is a diagram showing the configuration of an electronic content distribution system according to an embodiment of the present invention;
FIG. 2 is a functional block diagram of an electronic content management server device according to an embodiment of the present invention;
FIG. 3 is a functional block diagram of a resale management server device according to an embodiment of the present invention;
FIG. 4 is a functional block diagram of a sales server device according to an embodiment of the present invention;
FIG. 5 is a diagram showing a data structure related to first-marketed electronic content sale in an embodiment of the present invention;
FIG. 6 is a diagram showing a data structure related to remarketed electronic content sale in an embodiment of the present invention;
FIG. 7 is a diagram showing an example of the information stored in a content information storage unit in an embodiment of the present invention;
FIG. 8 is a diagram showing an example of the information stored in a sales site information storage unit in an embodiment of the present invention;
FIG. 9 is a diagram showing an example of the information stored in a delivery permission storage unit in an embodiment of the present invention;
FIG. 10 is a diagram showing an example of the information stored in a delivery condition storage unit in an embodiment of the present invention;
FIG. 11 is a diagram showing an example of the information stored in a merchandise information storage unit in an embodiment of the present invention;
FIG. 12 is a diagram showing an example of the information stored in a buying history storage unit in an embodiment of the present invention;
FIG. 13 is a diagram showing an example of the information stored in a user information storage unit in an embodiment of the present invention;
FIG. 14 is a diagram showing an example of the information stored in a resale delivery permission storage unit in an embodiment of the present invention;
FIG. 15 is a diagram showing an example of the information stored in a resale price storage unit in an embodiment of the present invention;
FIG. 16 is a diagram showing an example of the information stored in a resale stock quantity storage unit in an embodiment of the present invention;
FIG. 17 is a diagram showing an example of the information stored in a purchase history storage unit in an embodiment of the present invention;
FIG. 18 is a diagram showing an example of the information stored in a resale history storage unit in an embodiment of the present invention;
FIG. 19 is a diagram showing an example of the information stored in a license storage unit in an embodiment of the present invention;
FIG. 20 is a diagram showing an example of the information stored in a market state condition setting storage unit in an embodiment of the present invention;
FIG. 21 is a diagram showing an example of the information stored in a purchase score storage unit in an embodiment of the present invention;

FIG. 22 is a diagram showing an example of the information stored in a resale score storage unit in an embodiment of the present invention;

FIG. 23 is a diagram showing an example of the information stored in a purchase/resale condition setting storage unit in an embodiment of the present invention;

FIG. 24 is a diagram showing an example of the information stored in a purchase condition storage unit in an embodiment of the present invention;

FIG. 25 is a diagram showing an example of the information stored in a resale condition storage unit in an embodiment of the present invention;

FIG. 26 is a diagram showing an example of the information stored in a market score storage unit in an embodiment of the present invention;

FIG. 27 is a chart showing the sequence in a first-marketed product buying process in an embodiment of the present invention;

FIG. 28 is a chart showing the sequence in an electronic content download process in an embodiment of the present invention;

FIG. 29 is a chart showing the sequence in electronic content usage in an embodiment of the present invention;

FIG. 30 is a chart showing the sequence in a purchase process in an embodiment of the present invention;

FIG. 31 is a chart showing the sequence in a purchase price calculation process in an embodiment of the present invention;

FIG. 32 is a chart showing the sequence in a resale stock information providing process in an embodiment of the present invention;

FIG. 33 is a chart showing the sequence in a resale price calculation process in an embodiment of the present invention; and

FIG. 34 is a chart showing the sequence in an electronic content resale process in an embodiment of the present invention.

DETAILED DESCRIPTION

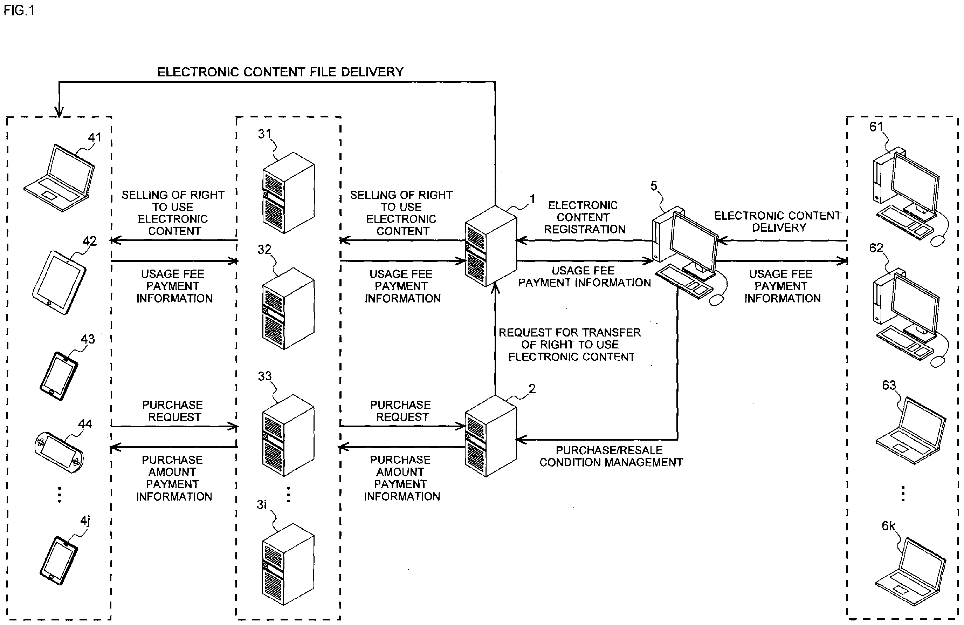

An embodiment of the present invention will be described in detail below with reference to the accompanying drawings. FIG. 1 shows the configuration of an electronic content distribution system according to this embodiment. The electronic content distribution system according to this embodiment includes: an electronic content management server device 1 that manages the electronic content to be provided to users; a resale management server device 2 that manages purchases of electronic content from users and resales of electronic content to users; sales server devices 3 formed sales server devices 31 through 3i that provide sales sites for setting electronic content as first-marketed products to users, purchases of electronic content from users, and resales of electronic content to users; user terminal devices 4 formed with user terminal devices 41 through 4j to be used by users ; a manager terminal device 5 to be used by a manager who manages electronic content distribution; and content provider terminal devices 6 formed with content provider terminal devices 61 through 6k to be used by electronic content providers, such as copyright owners or those in charge of managing copyrighted works. These devices are designed to be able to communicate via networks.

This embodiment concerns a system that deals in electronic books as the electronic content to be managed in its distribution, for example. Specifically, the sales sites to be provided by the sales server devices 3 are websites called e-book stores or electronic bookstores that sell electronic books in response to accesses from users. Alternatively, the user terminal devices 4 may sell electronic books in response to accesses through a special application. The sales server devices 3 are managed through terminal devices (not shown) operated by the managers of the respective sales sites. The content providers who use the content provider terminal devices 6 may be the authors of books or the book publishers' staff in charge of collective management of copyrights owned by authors.

Although this embodiment concerns an electronic content distribution system that deals in electronic books as electronic content as described above, the present invention is not limited to such an electronic content distribution system. For example, in a case where music data is handled as electronic content, the sales sites may be music distribution sites, and the content providers may be the composers of the music or those from record companies in charge. Likewise, in a case where the electronic content is moving image data such as television programs or movies, the sales sites may be video distribution sites, and the content providers may be those from television stations or distribution agencies in charge. Further, the electronic content distribution system according to the present invention can manage the distribution of various kinds of electronic content, such as application programs to be executed in computer devices like personal computers and smartphones, and game software to be operated in video game consoles or personal computers. Alternatively, two or more of the above may be handled by the electronic content distribution system.

<Configurations of the Respective Devices>

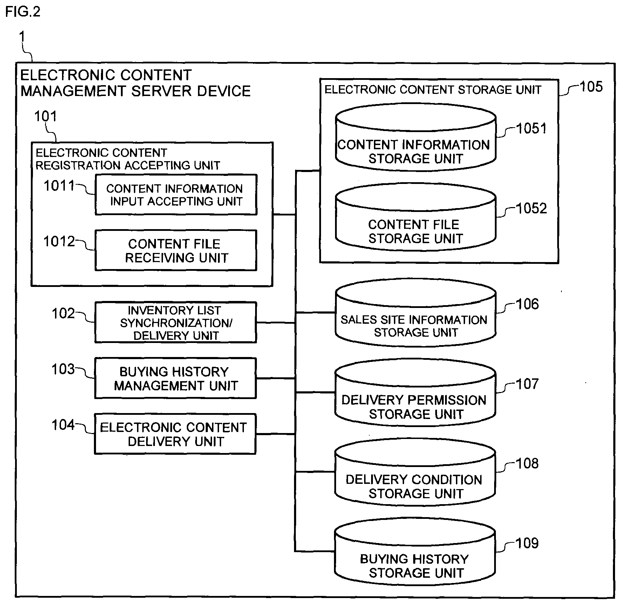

FIG. 2 is a functional block diagram of the electronic content management server device 1 according to this embodiment. As shown in this drawing, the electronic content management server device 1 includes the following units: an electronic content registration accepting unit 101 that accepts registration of electronic content from the manager terminal device 5; an inventory list synchronization/delivery unit 102 that provides the sales server devices 3 with an inventory list of the electronic content available on the respective sales sites; a buying history management unit 103 that manages buying histories in conjunction with first-marketed product sales processes and purchase/resale processes for electronic content; and an electronic content delivery unit 104 that delivers the electronic content to the user terminal devices 4. The electronic content management server device 1 also includes the following storage units: an electronic content storage unit 105 that stores the electronic content registered by the electronic content registration accepting unit 101; a sales site information storage unit 106 that stores information about the sale sites to be provided by the sales server devices 3; a delivery permission storage unit 107 that stores delivery permissions for the respective pieces of the electronic content on the respective sales sites; a delivery condition storage unit 108 that stores delivery conditions associated with the delivery permissions; and a buying history storage unit 109 that stores the histories of the users' buying of the electronic content.

The electronic content registration accepting unit 101 includes: a content information input accepting unit 1011 that accepts inputs of the attribute information about the electronic content and the like from the manager terminal device 5; and a content file receiving unit 1012 that receives electronic content files uploaded from the manager terminal device 5. The electronic content storage unit 105 includes: a content information storage unit 1051 that stores the electronic content attribute information and the like accepted by the content information input accepting unit 1011; and a content file storage unit 1052 that stores the electronic content files received by the content file receiving unit 1012.

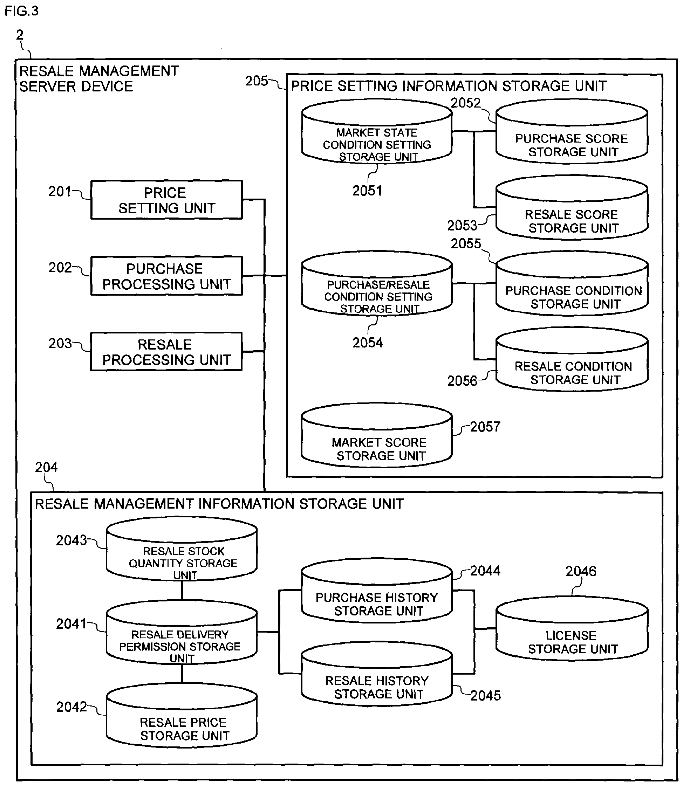

FIG. 3 is a functional block diagram of the resale management server device 2 according to this embodiment. As shown in this drawing, the resale management server device 2 includes: a price setting unit 201 that calculates a price when electronic content is purchased from a user or electronic content is resold to a user; a purchase processing unit 202 that performs processes related to purchases of electronic content from users; a resale processing unit 203 that performs processes related to resales of electronic content to users; a resale management information storage unit 204 that stores information about the resale stock of electronic content purchased from users and resale processes for the electronic content; and a price setting information storage unit 205 that stores the information to be used by the price setting unit 201 to determine purchase/resale prices.

The resale management information storage unit 204 includes: a resale delivery permission storage unit 2041 that stores information about permissions for resale deliveries of electronic content at the respective sales sites; a resale price storage unit 2042 that stores purchase prices and resale prices of electronic content based on the respective resale delivery permissions; a resale stock quantity storage unit 2043 that stores the resale stock quantity of the electronic content purchased from users in accordance with the respective resale delivery permissions; a purchase history storage unit 2044 that stores history information about purchases of electronic content from users; a resale history storage unit 2045 that stores history information about resale of electronic content to users; and a license storage unit 2046 that stores information about the licenses for the electronic content to be purchased or resold.

The price setting information storage unit 205 includes: a market state condition setting storage unit 2051 that stores information for determining a purchase score as a coefficient to be used in calculating a purchase price of electronic content and a resale score as a coefficient to be used in calculating a resale price of the electronic content, in accordance with the number of days elapsed since the date of release of the electronic content and the circulation quantity of the electronic content on a first-marketed product/resale product market; a purchase score storage unit 2052 that stores information related to the purchase score; a resale score storage unit 2053 that stores information related to the resale score; a purchase/resale condition setting storage unit 2054 that stores information about the conditions for designating electronic content to set a base price to be used in calculating a purchase/resale price of the electronic content, the electronic content being a group of electronic content such as the electronic content available on a specific sales site or the electronic content to be provided by a specific right holder, or specific electronic content; a purchase condition storage unit 2055 that stores information about the base price to be used in determining the purchase price of electronic content that satisfies the respective conditions stored in the purchase/resale condition setting storage unit 2054; a resale condition storage unit 2056 that stores information about the base price to be used in determining the resale price of electronic content that satisfies the respective conditions stored in the purchase/resale condition setting storage unit 2054; and a market score storage unit 2057 that stores information for determining a market score in accordance with the circulation quantity and the stock quantity of electronic content on the market, the market score being a coefficient to be used in calculating the purchase price and the resale price of electronic content.

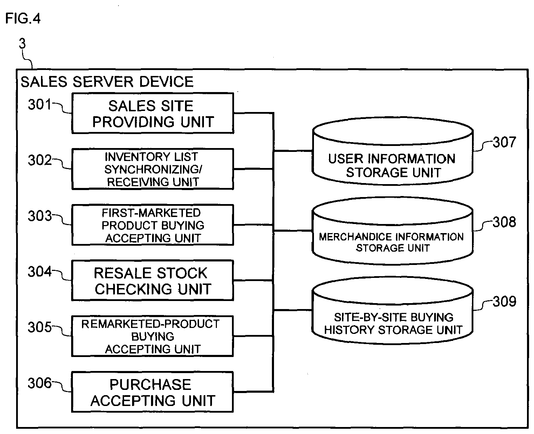

FIG. 4 is a functional block diagram of one of the sales server devices 3 according to this embodiment. As shown in this drawing, the sales server device 3 includes: a sales site providing unit 301 that provides the user terminal devices 4 with electronic content sales sites; an inventory list synchronizing/receiving unit 302 that receives an inventory list from the inventory list synchronization/delivery unit 102 ; a first-marketed product buying accepting unit 303 that accepts requests for buying of first-marketed electronic content from the user terminal devices 4 via the sales sites; a resale stock checking unit 304 that acquires information about the resale stock of the electronic content included in the inventory list; a remarketed-product buying accepting unit 305 that accepts requests for buying of the resale stock from the user terminal devices 4 via the sales sites; and a purchase accepting unit 306 that accepts requests for purchases of electronic content from the user terminal devices 4 via the sales sites . The sales server device 3 also includes the following storage units: a user information storage unit 307 that stores information about users; a merchandise information storage unit 308 that stores merchandise information received by the inventory list synchronizing/receiving unit 302; and a site-by-site buying history storage unit 309 that stores the users' electronic content buying histories supplied from the sales sites provided by the sales server devices 3.

The user terminal devices 4 may be any appropriate computer devices being used by the users who use electronic content. The computer devices may be personal computers such as notebook computers, desktop personal computers, or tablet PCs, portable terminals such as portable telephone devices, smartphones, or personal digital assistants (PDAs), or portable or non-portable gaming machines, for example. One user may use one user terminal device 4, or one user may use more than one user terminal device 4.

The manager terminal device 5 and the content provider terminal devices 6 may also be any appropriate computer devices like the user terminal devices 4. Although only one manager terminal device 5 is shown in FIG. 1, two or more manager terminal devices 5 may be provided.

<Data Structure in Each Storage Unit>

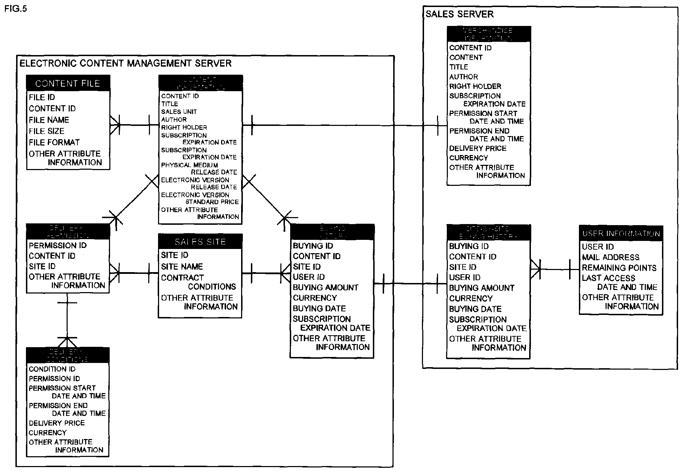

FIG. 5 is an entity relationship (ER) diagram showing a data structure related to first-marketed product sale. This drawing schematically shows the information stored record by record in the respective storage units described above, and the relationship between the pieces of the information.

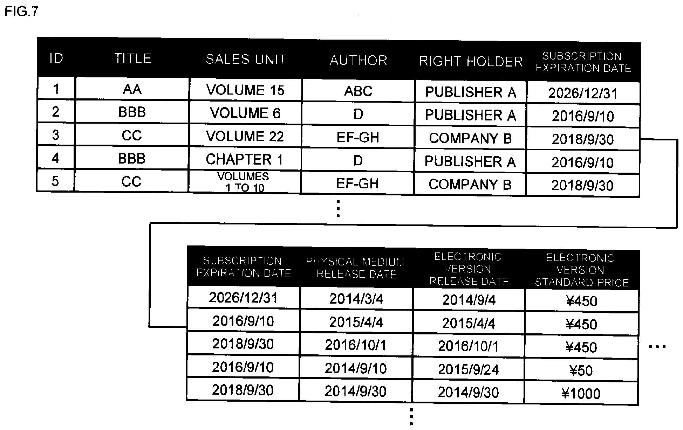

First, the content information storage unit 1051 stores information that includes: the content IDs for uniquely identifying electronic content; the sales units; the titles of the electronic content; the right holders such as the authors or the publishers; the subscription periods during which the subscriptions are valid after the circulation by the electronic content distribution system; the dates of release of a physical media of the contents, in other words, the dates of release of paper books if the electronic content are an electronic book; the dates of release of the electronic content; and the standard prices of the electronic content determined by the holders of the rights to the electronic content or the like. FIG. 7 shows an example of the information stored in the content information storage unit 1051. As mentioned above, this embodiment concerns an example where electronic books are handled as electronic content. Therefore, the sales units in this example may be volumes of paper books such as volume 15 and volume 6, smaller sales units such as chapter 1, or larger sales units such as a set of volumes 1 through 10. In this example, the standard price of the electronic content in Japanese yen is stored. However, a currency and a numerical value may be designated as appropriate, and a standard price in any currency may be set.

Meanwhile, the content file storage unit 1052 stores various kinds of information about files, including the file IDs for uniquely identifying the files, the content IDs indicating which content the files are about, the file names, the file sizes, and the file formats.

Here, content information and content files have one-to-many correspondence, as one set of content information can be associated with two or more content files. With this configuration, it is possible to handle a single piece of content formed with two or more files, or content for which a file format can be selected from among file formats in accordance with a request from a user.

The content information and the content files are supplied from the content provider terminal devices 6 to the manager terminal device 5 by any appropriate means such as electronic mail or transfer via a file server (not shown) . The manager terminal device 5 then conducts registration through the electronic content registration accepting unit 101. Alternatively, the content provider terminal devices 6 may directly conduct registration through the electronic content registration accepting unit 101. In this manner, the electronic content to be provided by content providers is gathered in the electronic content storage unit 105.

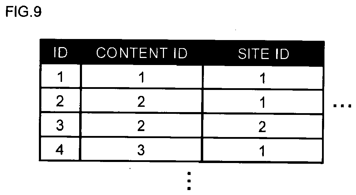

The content information can also be associated with more than one delivery permission stored in the delivery permission storage unit 107. Here, delivery permissions includes information such as the permission IDs for uniquely identifying the delivery permissions, the content IDs indicating the electronic content for which the delivery permissions are issued, and the site IDs indicating the sales sites. As a single piece of electronic content is dealt on more than one sales site, a single piece of content information can be associated with more than one delivery permissions. FIG. 9 shows an example of the information stored in the delivery permission storage unit 107.

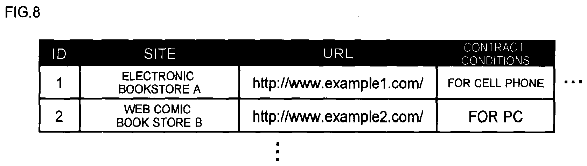

The information about sales sites stored in the sales site information storage unit 106 includes site IDs for uniquely identifies the sales sites, basic information such as the site names, and URLs (Uniform Resource Locators), and contract conditions. FIG. 8 shows an example of the information stored in the sales site information storage unit 106. The relationship between sales sites and delivery permissions is like the above described relationship between content information and delivery permissions, and one sales site can be associated with more than one delivery permission, as one delivery site handles more than one piece of electronic content. FIG. 8 also shows an example of information as the contract conditions that specify the types of the user terminal devices 4, such as portable telephones and PCs, to which electronic content is provided from the sales sites.

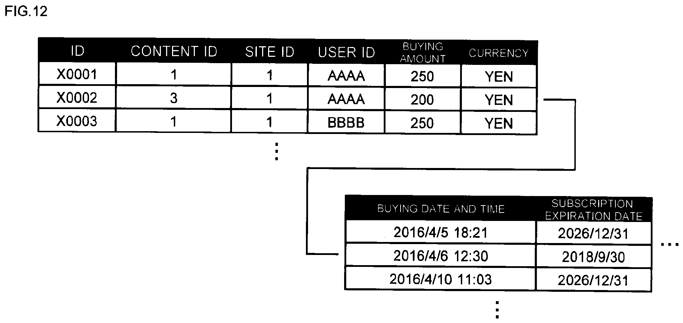

The information stored in the buying history storage unit 109 includes buying IDs for uniquely identifying buying histories, content IDs indicating the bought electronic content, site IDs indicating the sales sites from which the buying were made, user IDs indicating the users who made the buying, the buying amounts, the currency, the buying dates and times, and the expiration dates for the users to read the electronic content. This information is handled as information associated with a sales site, and users buying pieces of electronic content from the single sales site. Therefore, the single site is associated with more than one buying history. FIG. 12 shows an example of the information stored in the buying history storage unit 109.

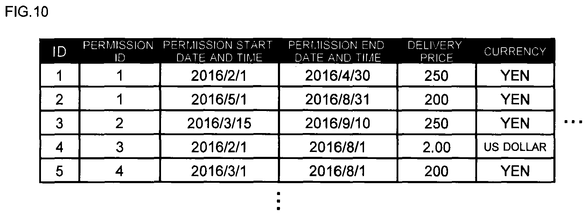

The electronic content distribution system according to this embodiment is also designed to be able to associate one delivery permission with two or more delivery conditions. The information stored in the delivery condition storage unit 108 includes condition IDs for uniquely identifying delivery conditions, permission IDs indicating the delivery permissions with which the delivery conditions are associated, permission start dates and times and permission end dates and times indicating the periods during which the delivery conditions are valid, the delivery prices of electronic content, and the currency. Delivery conditions including such information can be set for a single delivery permission. Thus, various delivery conditions can be set for electronic content so that prices vary depending on delivery time and currency. FIG. 10 shows an example of the information stored in the delivery condition storage unit 108.

The site-by-site buying history storage unit 309 in each sales server device 3 stores buying histories including information similar to that stored in the buying history storage unit 109 in the electronic content management server device 1. However, while the buying history storage unit 109 stores the buying histories related to all the sales sites included in the electronic content distribution system, the site-by-site buying history storage unit 309 in the sales server device 3 stores only the buying histories related to the sales server device 3.

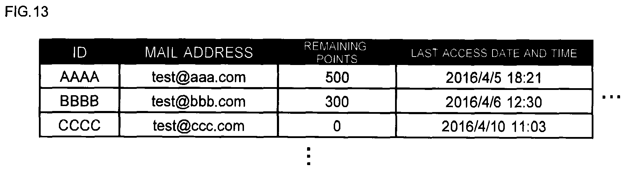

The sales server device 3 also stores information about the users using the sales site in the user information storage unit 307. Here, the information about the users includes user IDs for uniquely identifying the users, mail addresses of the users, the remaining points that can be used in buying electronic content or the like on the sales site, and the dates and times of the last access to the sales site. FIG. 13 shows an example of the information stored in the user information storage unit 307.

The merchandise information storage unit 308 stores merchandise information that is the information about the electronic content to be provided to the users from the sales site. This information is created in accordance with the currently set delivery conditions regarding the respective pieces of electronic content each sales site is permitted to deliver. That is, an inventory list is created in accordance with the content information, the delivery permissions, and the delivery conditions.

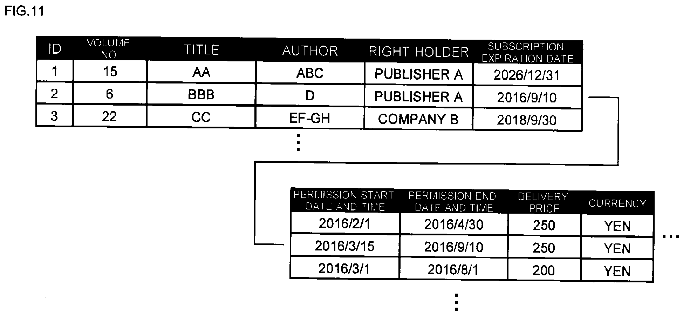

FIG. 11 shows an example of the information stored in the merchandise information storage unit 308. This table shows an example of the inventory list as of March 1, 2016, at "Electronic Bookstore A" with site ID 1 shown in FIG. 8. First, as can be seen from the delivery permissions in FIG. 9, the three delivery permissions with permission IDs 1, 2, and 4 are associated with "Electronic Bookstore A" with site ID 1. The content associated with the delivery permission with permission ID 1 is content with content ID 1. As can be seen from the content information in FIG. 7, the content with content ID 1 is volume 15 of title "AA". Further, as can be seen from the delivery conditions in FIG. 10, the delivery condition with permission ID 1 on March 1, 2016, is a delivery price of 250 yen with condition ID 1. Here, the necessary pieces of information contained in the content information, the delivery permissions, and the delivery conditions are combined, so that the merchandise information shown in FIG. 11 can be created. Such a process is then performed on all the delivery permissions, so that the inventory lists on the respective sales sites can be created.

The above described process of creating an inventory list on each sales site is performed on a regular basis by the inventory list synchronization/delivery unit 102, and the inventory list is delivered to the inventory list synchronizing/receiving unit 302, which in turn synchronizes the list, so that the list of the merchandise available on the sales site provided by the sales server device 3 can be recorded in the merchandise information storage unit 308.

In this embodiment, dates are set as the permission start date and time and the permission end date and time in the delivery conditions. As the above described inventory list is created and delivered once a day, the inventory list in the merchandise information storage unit 308 can be always kept up to date. In a case where finer details including times are also set as the permission start date and time and the permission end date and time, the process of generating the inventory list should be performed at shorter intervals. In a case where the permission start date and time and the permission end date and time are set on a weekly basis or a monthly basis, the process of generating the inventory list may be performed at longer intervals accordingly.

The above described information stored in the respective storage units in the electronic content management server device 1 and the sales server devices 3 is used in first-marketed electronic content sale by the electronic content distribution system according to this embodiment.

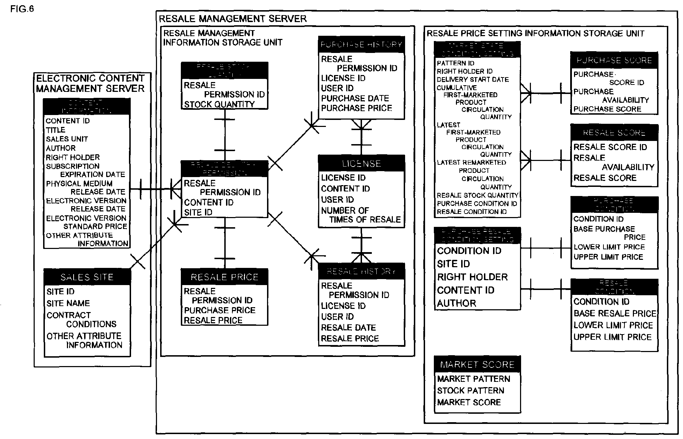

FIG. 6 is an ER diagram showing a data structure related to remarketing of electronic content by the electronic content distribution system according to this embodiment. Here, the information about content stored in the content information storage unit 1051, and the information about sales sites stored in the sales site information storage unit 106, which have been described with reference to FIG. 5, are also used. In the description below, the content information storage unit 1051 and the sales site information storage unit 106 of the electronic content management server device 1 are referred to. However, similar storage units may be provided in the resale management server device, and data synchronization may be performed regularly or when the information stored in any of the storage units is updated.

In remarketing, in addition to the information stored in the electronic content management server device 1, the information stored in the storage units in the resale management information storage unit 204 and the price setting information storage unit 205 of the resale management server device 2 is used.

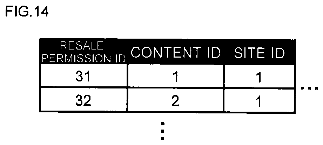

The resale delivery permission storage unit 2041 stores information indicating permissions for electronic content purchase/resale on the sales sites provided by the respective sales server devices 3. Like the above described delivery permission storage unit 107 that stores permissions for first-marketed electronic content deliveries from the respective sales sites, the resale delivery permission storage unit 2041 can store purchase/resale permissions under the site IDs of the sales sites and the content IDs of electronic content. FIG. 14 shows an example of the information stored in the resale delivery permission storage unit 2041. Although sales sites and electronic content can be designated in regard to both purchases and resale in this example, purchases may be permitted separately from permissions for resale.

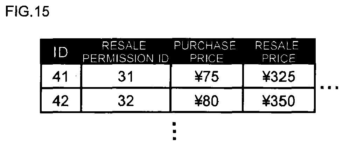

The resale price storage unit 2042 stores information about electronic content purchase/resale prices based on resale delivery permissions. Here, the information includes IDs for uniquely identifying respective records, resale permission IDs designating the resale delivery permissions corresponding to the respective records, and purchase/resale prices. FIG. 15 shows an example of the information stored in the resale price storage unit 2042. As will be described later, the purchase/resale prices here are calculated by the price setting unit 201.

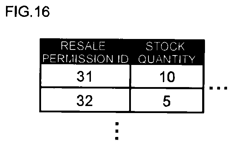

The resale stock quantity storage unit 2043 stores the resale stock quantities of respective pieces of electronic content, in other words, the stock quantities of the pieces of electronic content that have been purchased in accordance with the resale delivery permissions and are available for resale. For example, the resale stock quantity storage unit 2043 stores resale permission IDs for identifying resale delivery permissions, and the stock quantities corresponding to the resale permission IDs. FIG. 16 shows an example of the information stored in the resale stock quantity storage unit 2043. With this configuration, the respective electronic content stock quantities on each sales site can be referred to. Also, as the resale delivery permissions are associated with the content IDs for identifying electronic content, the respective electronic content stock quantities can be referred to between different sales sites. Further, a storage unit that stores the total resale stock quantities of electronic content regardless of sales sites, like storing the content IDs and the stock quantities corresponding to the content IDs, may be employed separately from the other storage units.

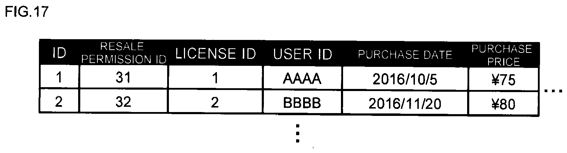

The purchase history storage unit 2044 stores information about the history of electronic content purchases from users conducted in accordance with the resale delivery permissions. The information includes resale permission IDs for identifying the resale delivery permissions, license IDs for identifying licenses, user IDs for identifying users as the providers, purchase dates, and purchase prices. FIG. 17 shows an example of the information stored in the purchase history storage unit 2044. A license is issued when a piece of electronic content is first purchased, and this license is used in later purchases and resale.

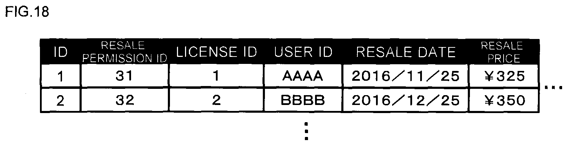

The resale history storage unit 2045 stores information about the history of electronic content resale to users conducted in accordance with the resale delivery permissions. The information includes resale permission IDs for identifying the resale delivery permissions, license IDs for identifying licenses, user IDs for identifying users as resale destinations, resale dates, and resale prices. FIG. 18 shows an example of the information stored in the resale history storage unit 2045.

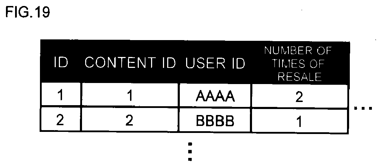

The license storage unit 2046 stores information about the licenses to be used in purchases/resale of electronic content. The information includes IDs for identifying the licenses, content IDs for identifying the corresponding content, user IDs indicating the current holders of the licenses, and the number of times resale has been conducted, for example. FIG. 19 shows an example of the information stored in the license storage unit 2046.

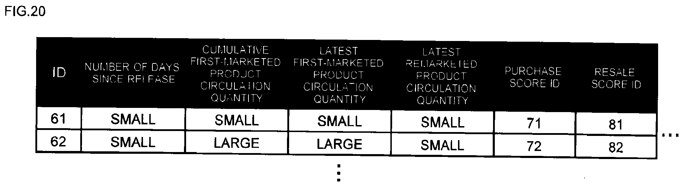

The market state condition setting storage unit 2051 stores combinations of parameters and scores. The parameters include the number of days elapsed since the date of release of content, the cumulative first-marketed product circulation quantity, the latest first-marketed product circulation quantity, and the latest remarketed product circulation quantity. The scores are a purchase score ID for determining a coefficient to be used in calculating a purchase price of electronic content, and a resale score ID for determining a coefficient to be used in calculating a resale price of the electronic content. FIG. 20 shows an example of the information stored in the market state condition setting storage unit 2051. As for the respective parameters in this example, if the number of days elapsed since the date of release of content is 30 or less, the number of days elapsed since the release is set as "small". If the cumulative first-marketed product circulation quantity is 10000 or larger, the cumulative first-marketed product circulation quantity is set as "large". If the latest remarketed product circulation quantity is 500 or larger, the latest remarketed product circulation quantity is set as "large". In this manner, threshold values are set beforehand for the respective items so that the parameters can be determined in accordance with the threshold values. Also, the respective parameters may be determined from only the data of the electronic content, or may be determined from information about the corresponding physical media (such as paper books or optical recording media) as well. Alternatively, different parameters may be determined from information about the electronic content and information about the physical media.

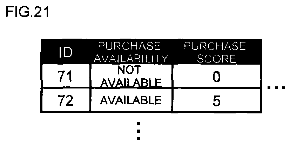

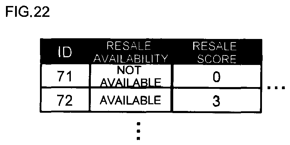

The purchase score storage unit 2052 stores IDs (purchase score IDs) for identifying purchase scores, purchase availability, and the purchase scores. As will be described later, a purchase score in this example is a coefficient to be used in calculating a purchase price of electronic content to be purchased from a user. FIG. 21 shows an example of the information stored in the purchase score storage unit 2052. Likewise, the resale score storage unit 2053 stores IDs (resale score IDs) for identifying resale scores, resale availability, and the resale scores. FIG. 22 shows an example of the information stored in the resale score storage unit 2053. As will be described later, a resale score in this example is a coefficient to be used in calculating a resale price of electronic content.

The purchase/resale condition setting storage unit 2054 stores combinations of information, such as IDs (condition IDs) for identifying purchase/resale conditions, site IDs for identifying sales sites, content IDs for identifying electronic content, and the names of the authors of the content. These pieces of information are information for setting purchase conditions and resale conditions for respective pieces of content. The purchase condition storage unit 2055 stores condition IDs and combinations of values of a base price, a lower limit price, and an upper limit price to be used in calculating a purchase price of electronic content. The resale condition storage unit 2056 stores condition IDs and combinations of values of a base price, a lower limit price, and an upper limit price to be used in calculating a resale price of electronic content.

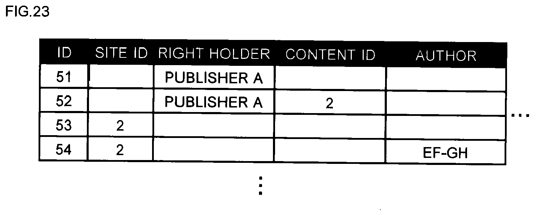

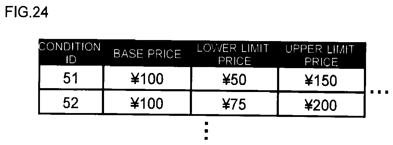

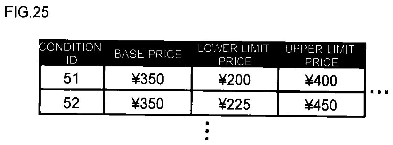

FIG. 23 shows an example of the information stored in the purchase/resale condition setting storage unit 2054. FIG. 24 shows an example of the information stored in the purchase condition storage unit 2055. FIG. 25 shows an example of the information stored in the resale condition storage unit 2056. Referring to these drawings, in an example case where the holder of the right to content is "Publisher A", condition ID 51 is employed, the purchase conditions are a base price of 100 yen, a lower limit price of 50 yen, and an upper limit price of 150 yen, and the resale conditions are a base price of 350 yen, a lower limit price of 200 yen, and an upper limit price of 400 yen. In another example case where the right holder is "Publisher A", and the content ID is "2", both condition IDs 51 and 52 are applicable, but condition ID 52 with a larger number of satisfied conditions is employed in this case. In such a case where two or more IDs are applicable in setting purchase/resale conditions, it is preferable to determine beforehand which condition is to be prioritized over the other conditions. Although characters are used in indicating right holders and authors in this example, it is preferable to prepare beforehand storage units, such as a right holder information storage unit that stores combinations of a right holder ID for identifying a right holder, a right holder name, and the like, and an author information storage unit that stores combinations of an author ID for identifying an author, an author name, and the like. In such a case, it is preferable to set conditions, using right holder IDs, author IDs, and the like.

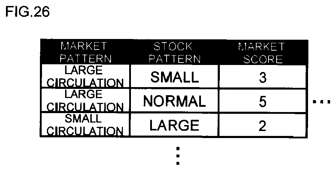

The market score storage unit 2057 stores combinations of parameters indicating an electronic content circulation quantity on the market and a stock quantity, and the corresponding market scores. FIG. 26 shows an example of the information stored in the market score storage unit 2057. As will be described later, a market score in this example is a coefficient to be used in calculating a purchase price and a resale price of electronic content. It is determined whether the parameters indicating electronic content circulation quantities and stock quantities stored in the market score storage unit 2057 are greater than threshold values that are set in advance, as in the setting of the market state conditions .

The above described various kinds of information are used in electronic content purchase and resale processes to be performed by the electronic content distribution system according to this embodiment. It should be noted that the configurations of the respective storage units described herein are merely examples, and storage units of any other configurations may be employed. For example, two or more storage units may be integrated into one storage unit to be managed, or each storage unit may be divided into finer storage units to be managed, as long as the storage units include the same information as above.

In determining purchase availability, resale availability, and prices, a market score is first used as a coefficient. For example, in a situation where the circulation quantity is large while the resale stock is small, the demand for the content in the market can be regarded as high. Therefore, a high market score should be set, and both the purchase price and the resale price should be set at high prices. In a case where finer purchase and resale availability and prices are set, a purchase score and a resale score are used. For example, in a situation where the circulation quantity is large while the resale stock is also large, the content can be regarded as popular in the market. Therefore, the resale price should be set at a relatively high price. However, to avoid overstocking for resale, the purchase price is set at a relatively low price, or purchases availability is set impossible. As described above, after a rough price based on the popularity of content in the market is determined from the market score, a purchase score and a resale score are determined from information such as the first-marketed and remarketed product quantities, the resale stock quantity, and the number of days elapsed since the date of release. Thus, finer conditions can be set for purchases and resale separately from each other.

<Sequence in Each Process>

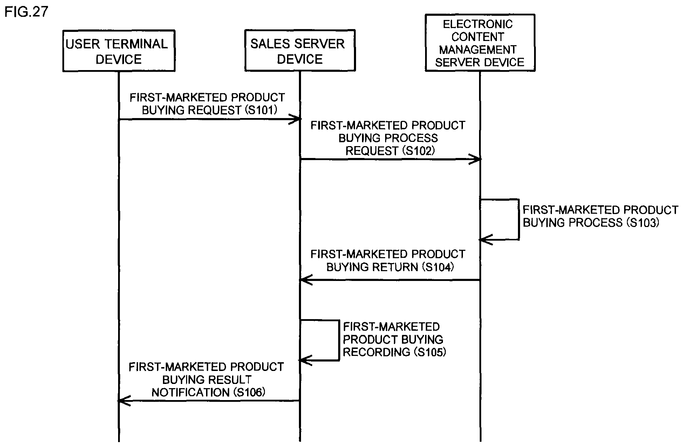

Next, the sequence in each process to be performed by the electronic content distribution system according to this embodiment is described. FIG. 27 is a chart showing the sequence in the process to be performed when a user buys first-marketed electronic content.

First, in step S101, the user makes a product buying request via a sales site. Here, from a web browser of a user terminal device 4, the user accesses a sales site provided as a website by the sales site providing unit 301 of a sales server device 3, and searches for the desired product. By doing so, the user detects the electronic content he/she wishes to buy as a first-marketed product, and transmits a buying request to the sales server device 3.

The first-marketed product buying accepting unit 303 of the sales server device 3 receives the first-marketed product buying request from the user, and, in step S102, issues a first-marketed product buying process request to the electronic content management server device 1.

Receiving the first-marketed product buying process request, the electronic content management server device 1 performs a first-marketed product buying process on the electronic content in step S103. More specifically, using the information about the electronic content to be bought as a first-marketed product, the sales site, the user, the buying amount, and the currency, the buying history management unit 103 records a buying history into the buying history storage unit 109.

After the first-marketed product buying process in the electronic content management server device 1, a response to the effect that the first-marketed product buying process has been completed is transmitted to the sales server device 3 in step S104, and recording of the first-marketed product buying is performed in the sales server device 3 in step S105. Here, the recording is to record a buying history into the site-by-site buying history storage unit 309. In the recording of a buying history into the buying history storage unit 109 in step S103 and the recording of a buying history into the site-by-site buying history storage unit 309 in step S105, buying history information may be created in each of the steps. Alternatively, after the recording of a buying history into the buying history storage unit 109 in step S103, the buying history may be transmitted from the electronic content management server device 1 to the sales server device 3 in step S104, and be recorded into the site-by-site buying history storage unit 309 in step S105.

Lastly, in step S106, a notification to the effect that the first-marketed product buying process on the electronic content desired by the user has been completed is transmitted from the sales server device 3 to the user terminal device 4, and the process then comes to an end.

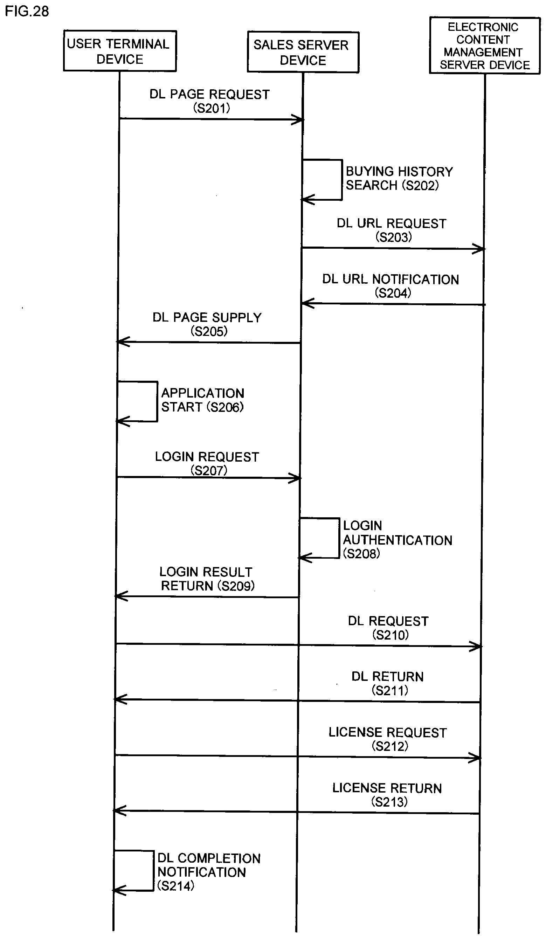

In the first-marketed product buying process shown in FIG. 27, the actual electronic content delivery to the user terminal device 4 has not been conducted yet. Therefore, the first-marketed product buying process in this case is a first-marketed product sales process to be performed to sell a use right (a license) to the electronic content to the user, and the buying history to be recorded into the buying history storage unit 109 can be regarded as equivalent to a license to be issued to the buyer of the electronic content. For the user to actually use the bought content, it is necessary to download the electronic content through the process shown in FIG. 28.

First, in step S201, the user operates the user terminal device 4, to request the sales server device 3 to transmit the web page for downloading the electronic content to which the user has a use right.

In step S202, using information such as the user ID and the content ID, the sales server device 3 searches the site-by-site buying history storage unit 309 for a buying history of the electronic content bought by the user.

If a valid buying history is detected in step S202, in other words, if the user who has requested the download page for the electronic content has a right to use the electronic content, the process moves on to step S203, and the sales server device 3 requests the electronic content management server device 1 to transmit the download URL for the electronic content.

In step S204, the electronic content management server device 1 notifies the sales server device 3 of the download URL for the electronic content, and the sales server device 3 provides the user terminal device 4 with the download page for the electronic content in step S205. In step S206, an application program for using the electronic content is started in the user terminal device 4. Since electronic books are handled as electronic content in this embodiment, an application program such as a viewer for reading electronic books is started in step S206. In a case where the electronic content is of some other type, an application program suitable for using the electronic content should be started. For example, if music data is handled as electronic content, a music player should be started. If moving image data is handled as electronic content, a video player should be started.

After the application program is started in the user terminal device 4, a request for login to the sales server device 3 is transmitted from the user terminal device 4 in step S207. More specifically, inputs of the user ID or a mail address, a password that has been set in advance, and the like are received from the user, and these pieces of information are transmitted as a request for login to the sales server device 3.

In step S208, the sales server device 3 performs processing such as comparing the user information included in the login request received in step S207 with information stored in the user information storage unit 307. In step S209, the sales server device 3 returns a login result to the user terminal device 4. If the login is unsuccessful, an appropriate process should be performed. For example, inputs of the user ID and a password from the user are again accepted, or the download process is suspended.

The process then moves on to step S210, and the user terminal device 4 issues an electronic content download request to the electronic content management server device 1. In step S211, the user terminal device 4 receives a download return.

To use bought and downloaded electronic content in this embodiment, the user needs to have a license file. First, in step S212, the user terminal device 4 issues a license file request to the electronic content management server device 1. In step S213, a license file is transmitted to the user terminal device 4. Alternatively, some kinds of electronic content may not require license files, and in that case, steps S212 and S213 can be skipped.

Lastly, in step S214, the user is notified of completion of the download, and the electronic content download process is completed. Thus, the user can use the electronic content.

Since electronic books are handled as electronic content in this embodiment, using the electronic content in this example is reading an electronic book.

Also, the downloading in this case may be recording the electronic content into an auxiliary storage device in the user terminal device 4 so that the electronic content can be continuously used in the user terminal device 4 after the single download process. Alternatively, electronic content may be downloaded as a temporary file, and be stored into a main storage device or an auxiliary storage device in the user terminal device 4. In this case, electronic content is provided by a so-called streaming method so that electronic content is deleted once the user uses the electronic content.

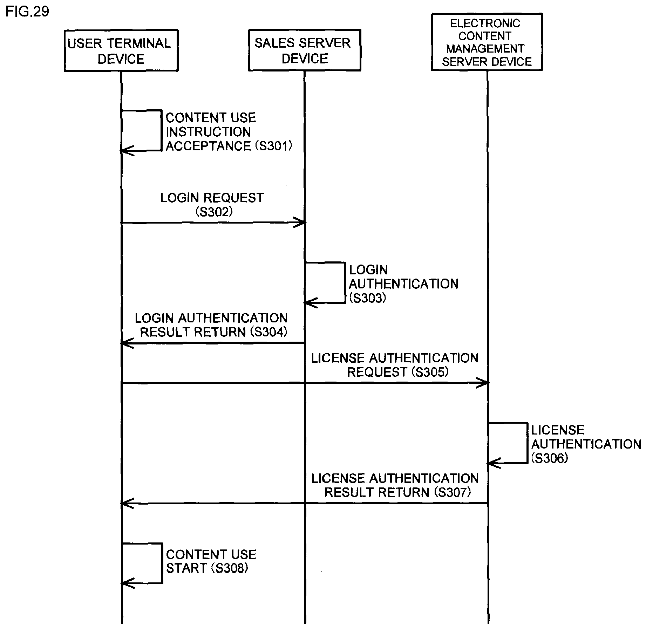

FIG. 29 is a chart showing the process to be performed when the user uses the electronic content recorded into the user terminal device 4 through the electronic content download process shown in FIG. 28.

First, in step S301, an electronic content use instruction from the user is accepted. Here, a selected electronic book to be viewed with an electronic book viewer that operates in the user terminal device 4 is accepted, for example. In this manner, an instruction from the user is accepted.

In steps S302 through S304, a login process is performed. Here, the same process as the above described process in steps S207 through S209 in Fig. 28 is performed.

In step S305, the user terminal device 4 requests the electronic content management server device 1 to authenticate the validity of the license for viewing the electronic content. In step S306, the information about the user's history of the buying of the electronic content and the subscription expiration date stored in the buying history storage unit 109 is referred to, and the validity of the license is authenticated.

In step S307, a result of the license authentication is transmitted to the user terminal device 4. If the license is valid, use of the electronic content in the user terminal device 4 is started in step S308.

In the above manner, a user can buy and download electronic content as a first-marketed product, and use the electronic content by viewing it, for example. The electronic content distribution system according to this embodiment further performs processes related to a purchase of electronic content from a user and resale of the electronic content.

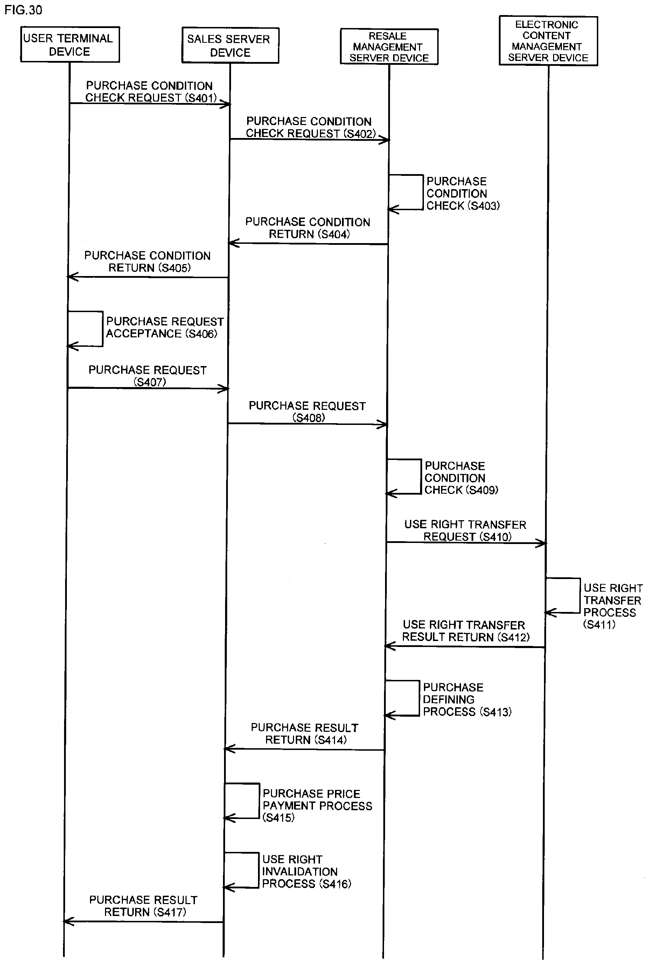

FIG. 30 is a chart showing the sequence in a process of purchasing electronic content from a user. First, in step S401, a user terminal device 4 issues a purchase condition check request to a sales server device 3. This request may be issued when there is an explicit request for checking of the purchase conditions for desired electronic content from a user through a sales site as a web page or an electronic book viewer. Alternatively, this request may be automatically issued when a web page or an electronic book viewer presents electronic book information to a user.

After received by the purchase accepting unit 306 of the sales server device 3, the purchase condition check request is further transmitted to the purchase processing unit 202 of the resale management server device 2 in step S402. In step S403, the purchase conditions are checked. Here, the purchase condition check request includes the user ID of the user who wishes to sell and the content ID of the desired electronic content, for example, and the purchase processing unit 202 requests the price setting unit 201 to check purchase availability and calculate a purchase price.

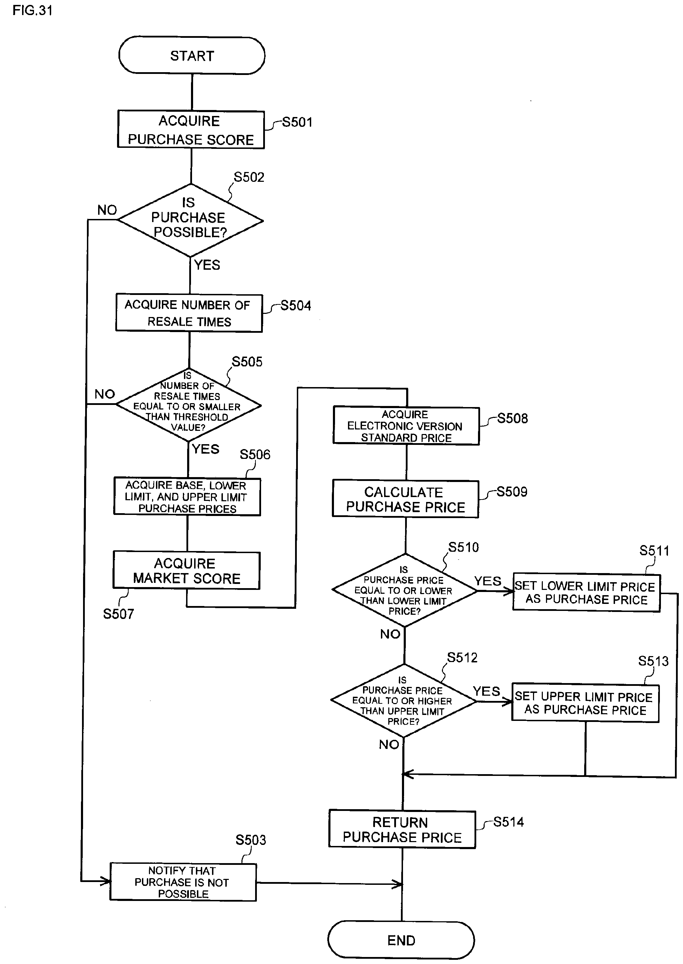

FIG. 31 is a flowchart showing the sequence in the purchase price calculation process to be performed by the price setting unit 201. In the purchase price calculation process, a purchase score is first acquired in step S501. This is performed in the following manner. The circulation quantity and the like of the electronic content obtained from the buying history storage unit 109 of the electronic content management server device 1 and the resale history storage unit 2045 of the resale management server device 2, for example, are compared with the information stored in the market state condition setting storage unit 2051, and the purchase score ID to be used is determined. Purchase availability and a purchase score are then acquired from the purchase score storage unit 2052.

The process then moves on to step S502, and the purchase availability acquired in step S501 is checked. If the purchase is not possible, the process moves on to step S503, and the price setting unit 201 notifies the purchase processing unit 202 that the purchase is not possible. The process then comes to an end.

If the purchase is determined to be possible in step S502, the process moves on to step S504, and the number of times the electronic content to be sold has been resold is acquired. Here, the number of times of resale can be acquired by referring to the license storage unit 2046. Specifically, an inquiry using the user ID and the content ID is made. If the license storage unit 2046 stores the information corresponding to the user ID and the content ID, the number of times of resale associated with the information is acquired. If the license storage unit 2046 does not store any corresponding information, the electronic content has not been resold, and any license has not been issued yet. That is, the number of times of resale can be determined to be 0.

After the number of times of resale is acquired in step S504, a check is made to determine whether the number of times of resale is larger than a predetermined threshold value in step S505. Here, the threshold value may be a value that is uniformly set beforehand for all the electronic content being handled in the electronic content distribution system according to this embodiment. Alternatively, the threshold value may be determined by any other appropriate method. For example, threshold values for the respective pieces of content may be included as additional information in the content information storage unit 1051, or threshold values for the respective pieces of content and the respective right holders may be included as additional information in the purchase/resale condition setting storage unit 2054.

If the number of times of resale is determined to be larger than the threshold value in step S505, the process moves on to step S503, and the price setting unit 201 notifies the purchase processing unit 202 that the purchase is not possible. The process then comes to an end. If the number of times of resale is determined not to be larger than the threshold value, on the other hand, the process moves on to step S506.

In step S506, a base purchase price, a lower limit purchase price, and an upper limit purchase price are acquired. These values are acquired from the purchase/resale condition setting storage unit 2054 and the purchase condition storage unit 2055. First, the purchase/resale condition setting storage unit 2054 is referred to, and a condition ID is identified from information such as the site ID of the sales site to which the user has sent the purchase request, and the content ID, the right holder, and the author of the desired electronic content to be sold. The purchase condition storage unit 2055 is then referred to, and the base purchase price, the lower limit purchase price, and the upper limit purchase price associated with the condition ID are acquired.

In step S507, a market score is acquired. This is performed in the following manner. The circulation quantity of the electronic content obtained from the buying history storage unit 109 of the electronic content management server device 1 and the resale history storage unit 2045 of the resale management server device 2, the resale stock quantity stored in the resale stock quantity storage unit 2043, and the like are compared with the information stored in the market score storage unit 2057, and the market score to be used is acquired.

In step S508, the content information storage unit 1051 is referred to, and the standard price of the electronic content (the electronic version standard price) is acquired.

In step S509, a purchase price is calculated from the purchase score, the market score, the base purchase price, the electronic version standard price, and the number of times of resale, which have been acquired so far. In this embodiment, a purchase price is calculated according to the equation (1) shown below.
[Mathematical Formula 1]

$$P_1 = \left( \frac{(S_0 + S_1)}{100} P + P_{b1} \right) - P_r \cdots (1)$$

In the above equation (1), $P_1$ represents the purchase price, $S_0$ represents the market score, $S_1$ represents the purchase score, $P$ represents the electronic version standard price, $P_{b1}$ represents the base purchase price, and $P_r$ represents the deduction based on the number of times of sale. Here, the deduction based on the number of times of sale is calculated from the number of times of resale by an appropriate method so that the purchase price becomes lower as the number of times of resale increases.

After that, the process moves on to step S510, and a check is made to determine whether the purchase price calculated in step S509 is equal to or lower than the lower limit purchase price. If the purchase price is determined to be equal to or lower than the lower limit purchase price, the process moves on to step S511, and the lower limit purchase price is set as the purchase price. If the purchase price is neither equal to nor lower than the lower limit purchase price, the process moves on to step S512, and a check is made to determine whether the purchase price is equal to or higher than the upper limit price. If the purchase price is determined to be equal to or higher than the upper limit purchase price, the process moves on to step S513, and the higher limit purchase price is set as the purchase price.

Lastly, in step S514, the price setting unit 201 returns the purchase price to the purchase processing unit 202, and the process then comes to an end.

After the purchase conditions are checked in step S403, the purchase conditions are transmitted from the resale management server device 2 to the sales server device 3 in step S404. In step S405, the sales server device 3 transmits the purchase conditions to the user terminal device 4, so that the user can check the purchase conditions for the electronic content regarding which the user has sent the check request.

If the purchase of the electronic content is possible, and the user wishes to sell the electronic content at the presented price, a purchase request is accepted in step S406, and the user terminal device 4 transmits a purchase request to the sales server device 3 in step S407.

In step S408, the purchase request is further transmitted to the resale management server device 2. In step S409, a purchase condition check process that is the same as the process performed in step S403 is performed. Alternatively, the result of the purchase condition check in step S403 may be saved, and be used in step S409.

In step S410, the resale management server device 2 issues a use right transfer request to the electronic content management server device 1. In step S411, a use right transfer process is performed. Specifically, in this process, the user's buying history information about the electronic content the user wishes to sell is deleted from the buying history storage unit 109 or is invalidated in the buying history storage unit 109 by the buying history management unit 103, so that the right to use the electronic content can be determined to be invalid when a request for authentication of the use right is made before downloading or using the electronic content.

In step S412, the electronic content management server device 1 transmits a result of the use right transfer process to the resale management server device 2. In step S413, a purchase defining process is performed in the resale management server device 2. This process includes recording of a purchase history into the purchase history storage unit 2044, updating of the stock quantities in the resale stock quantity storage unit 2043, and updating of the information about the licenses stored in the license storage unit 2046.

Particularly, the process of updating the license storage unit 2046 varies depending on the number of times of resale of the purchased electronic content. In a case where the number of times of resale is 0, in other words, where a purchase of electronic content a user bought as a first-marketed product is accepted, the license storage unit 2046 does not store any information about the electronic content owned by this user, as described above. Therefore, a new license ID is generated, and is associated with the content ID of the electronic content before recorded. In this manner, a new license is issued. Since there is no user owning the newly issued license, the user ID is left blank at this stage.

In a case where the number of times of resale is one or more, on the other hand, the information about the license associated with the user ID of the user from whom the electronic content has been purchased and with the content ID of the content is stored in the license storage unit 2046. As the user from whom the electronic content has been purchased loses the license, the user ID is deleted from the record. Or the record is invalidated or deleted, and a new license not associated with any user ID is then issued. In this manner, a license not associated with any user ID exists at this stage. Thus, the user from whom the electronic content has been purchased loses the license to the electronic content, and the license becomes available for other users to buy.

In step S414, the resale management server device 2 notifies the sales server device 3 of a result of the purchase process. In step S415, the sales server device 3 performs a process of paying the user the purchase price. In step S416, a process of invalidating the right to use the purchased electronic content is performed in the sales server device 3.

Lastly, in step S417, the sales server device 3 returns a purchase result to the user terminal device 4, and the electronic content purchase process then comes to an end.

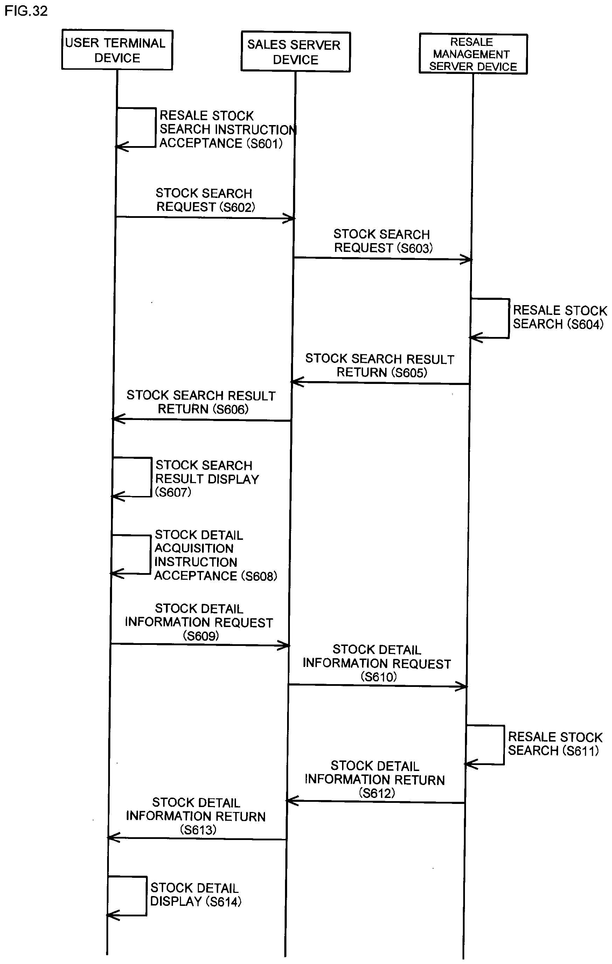

The electronic content purchased in this manner is remarketed in response to a request from a user. FIG. 32 is a chart showing the process to be performed when a resale stock search is performed in accordance with a user instruction.

First, in step S601, a resale stock search instruction from a user is accepted. Such an instruction may be accepted when there is an explicit request for checking of the purchase conditions for desired electronic content from a user through a sales site as a web page or an electronic book viewer. Alternatively, such an instruction may be automatically accepted so as to present the prices of remarketed products when a web page or an electronic book viewer presents to a user the merchandise information about first-marketed products stored in the merchandise information storage unit 308.

In step S602, a resale stock search request is transmitted from the user terminal device 4 to the sales server device 3. In step S603, the resale stock search request is further transmitted to the resale management server device 2.

In step S604, the resale management server device 2 acquires the stock status of the requested electronic content to be searched for by referring to the resale stock quantity storage unit 2043 and the license storage unit 2046. In step S605, the resale management server device 2 transmits the stock status as a search result return to the sales server device 3.

In step S606, the stock search result return is transmitted from the sales server device 3 to the user terminal device 4. In step S607, the stock search result is presented to the user. If there is resale stock, and the user requests more detailed information, a stock detail acquisition instruction is accepted in step S608, and a stock detail information request is transmitted to the sales server device 3 in step S609.

In step S610, the stock detail information request is transmitted to the resale management server device 2. In step S611, the resale management server device 2 acquires stock information by referring to the resale stock quantity storage unit 2043 and the license storage unit 2046. In step S612, the requested resale stock information is supplied to the sales server device 3.

In step S613, the sales server device 3 supplies the stock detail information to the user terminal device 4. In step S614, the stock detail information is presented to the user. Here, examples of the stock detail information include the availability of the resale stock in remarketing, the resale price, the number of times of resale in the past, the remaining number of times of resale before reaching the upper limit number of times of resale, the possibility of sale of the resale stock after the user buys it as a remarketed product, and an estimated price in the case of sale. As such information is presented to the user, the user can consider buying the electronic content as a remarketed product, taking into account the probability of sale after the use of the content. Here, the above described stock detail information might change after the user receives the stock detail information. Therefore, the stock detail information preferably has an expiration date so that the user is allowed to make the later-described remarketed product buying request only within a certain period after the receipt of the stock detail information.

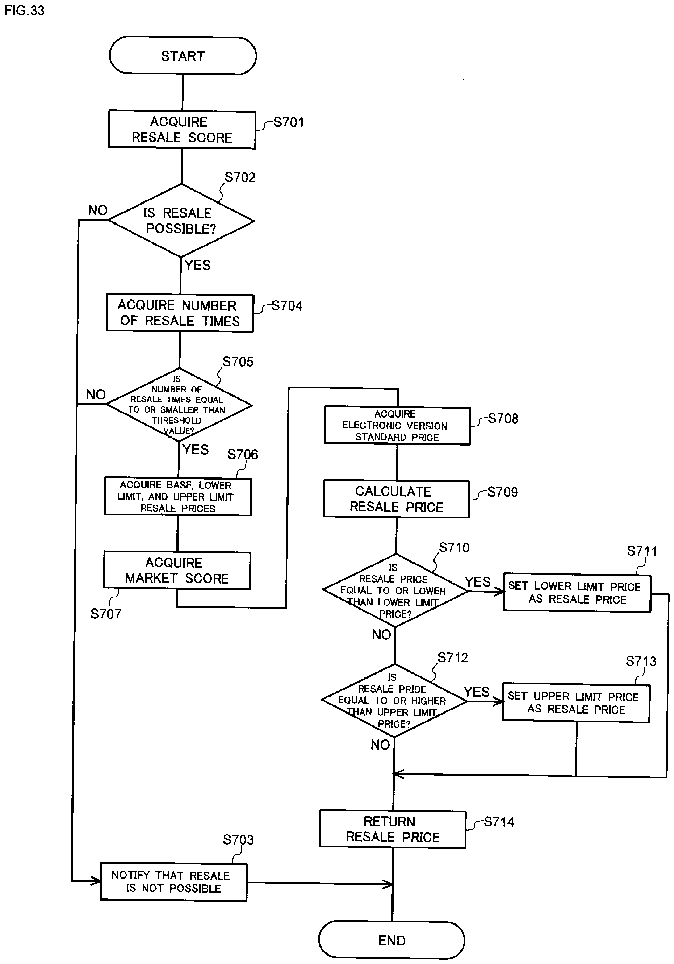

In a case where the availability of resale stock as a remarketed product and a resale price are presented by the resale management server device 2 in steps S604 and S611, a resale price calculation process is performed as shown in FIG. 33.

First, in step S701, a resale score is acquired. This is performed in the following manner. The circulation quantity and the like of the electronic content obtained from the buying history storage unit 109 of the electronic content management server device 1 and the resale history storage unit 2045 of the resale management server device 2, for example, are compared with the information stored in the market state condition setting storage unit 2051, and the resale score ID to be used is determined. Resale availability and a resale price are then acquired from the resale score storage unit 2053.

The process then moves on to step S702, and the resale availability acquired in step S701 is checked. If the resale is not possible, the process moves on to step S703, and the price setting unit 201 notifies that the buying is not possible. The process then comes to an end.

If the resale is determined to be possible in step S702, the process moves on to step S704, and the number of times the electronic content to be resold has been resold in the past is acquired. Here, the number of times of resale can be acquired by referring to the license storage unit 2046. Specifically, an inquiry using the content ID is made. If the license storage unit 2046 stores the information corresponding to the content ID, the number of times of resale associated with the information is acquired. In a case where there are licenses that are associated with the same content ID and different user IDs, a license that satisfies a predetermined condition may be selected. The predetermined condition may be that the license has the smaller number of times of resale, or has the larger number of times of resale within a predetermined threshold value as described later or smaller. Alternatively, all the licenses associated with the same content ID may be selected, and the resale price calculation process in the later steps may be performed on each of the selected licenses.

After the number of times of resale is acquired in step S704, a check is made to determine whether the number of times of resale is larger than a predetermined threshold value in step S705. Here, the threshold value may be a value that is uniformly set beforehand for all the electronic content being handled in the electronic content distribution system according to this embodiment. Alternatively, the threshold value may be determined by any other appropriate method. For example, threshold values for the respective pieces of content may be included as additional information in the content information storage unit 1051, or threshold values for the respective pieces of content and the respective right holders may be included as additional information in the purchase/resale condition setting storage unit 2054.

If the number of times of resale is determined to be larger than the threshold value in step S705, the process moves on to step S703, and the price setting unit 201 notifies that the resale is not possible. The process then comes to an end. If the number of times of resale is determined not to be larger than the threshold value, on the other hand, the process moves on to step S706.

In step S706, a base resale price, a lower limit resale price, and an upper limit resale price are acquired. These values are acquired from the purchase/resale condition setting storage unit 2054 and the resale condition storage unit 2056. First, the purchase/resale condition setting storage unit 2054 is referred to, and a condition ID is identified from information such as the site ID of the sales site to which the user has sent the remarketed product buying request, and the content ID, the right holder, and the author of the desired electronic content to be bought as a remarketed product. The resale condition storage unit 2056 is then referred to, and the base resale price, the lower limit resale price, and the upper limit resale price associated with the condition ID are acquired.

In step S707, a market score is acquired. This is performed in the following manner. The circulation quantity of the electronic content obtained from the buying history storage unit 109 of the electronic content management server device 1 and the resale history storage unit 2045 of the resale management server device 2, the resale stock quantity stored in the resale stock quantity storage unit 2043, and the like are compared with the information stored in the market score storage unit 2057, and the market score to be used is acquired.

In step S708, the content information storage unit 1051 is referred to, and the standard price of the electronic content (the electronic version standard price) is acquired.

In step S709, a resale price is calculated from the resale score, the market score, the base resale price, the electronic version standard price, and the number of times of resale, which have been acquired so far. In this embodiment, a resale price is calculated according to the equation (2) shown below.

[Mathematical Formula 2]

$$P_2 = \left( \frac{(S_0 + S_2)}{100} P + P_{b2} \right) - P_r \cdots (2)$$

In the above equation (2), $P_2$ represents the resale price, $S_0$ represents the market score, $S_2$ represents the resale score, P represents the electronic version standard price, $P_{b2}$ represents the base resale price, and $P_r$ represents the deduction based on the number of times of sale. Here, the deduction based on the number of times of sale is calculated from the number of times of resale by an appropriate method so that the purchase price becomes lower as the number of times of resale increases.

After that, the process moves on to step S710, and a check is made to determine whether the resale price calculated in step S709 is equal to or lower than the lower limit resale price. If the resale price is determined to be equal to or lower than the lower limit resale price, the process moves on to step S711, and the lower limit resale price is set as the resale price. If the resale price is neither equal to nor lower than the lower limit resale price, the process moves on to step S712, and a check is made to determine whether the resale price is equal to or higher than the upper limit price. If the resale price is determined to be equal to or higher than the upper limit resale price, the process moves on to step S713, and the upper limit resale price is set as the resale price.

Lastly, in step S714, the price setting unit 201 returns the resale price, and the process then comes to an end.

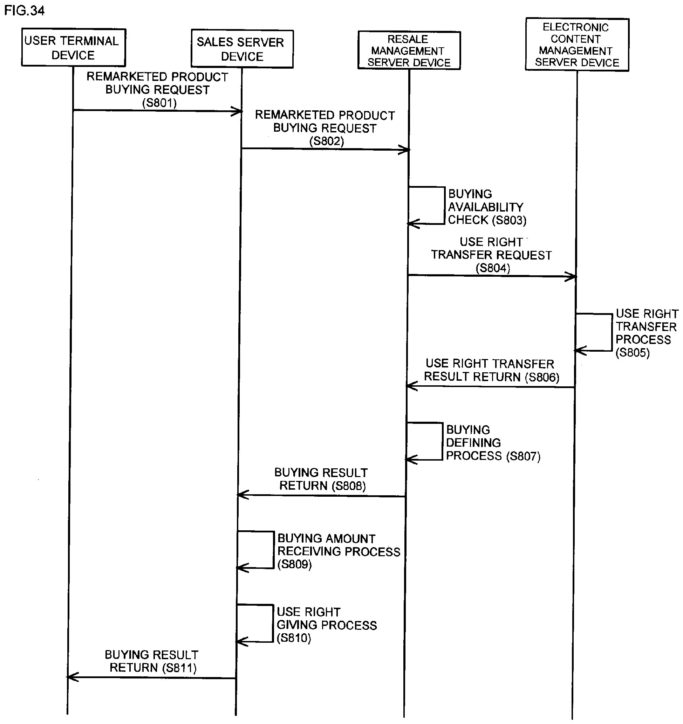

After the resale stock search is conducted through the process shown in FIG. 32, the user can buy the electronic content as a remarketed product through a process shown in FIG. 34. First, in step S801, a remarketed electronic content buying request from the user is accepted through a detailed resale stock display screen or the like, and a remarketed product buying request is transmitted from the user terminal device 4 to the sales server device 3.

In step S802, the sales server device 3 transmits the received remarketed product buying request to the resale management server device 2. In step S803, the resale management server device 2 checks the availability of the remarketed product buying and the resale price, as described above with reference to FIG. 33. Alternatively, the result of the resale condition check performed when the resale stock check process is performed as shown in FIG. 32 may be saved, and be used in step S803.

If the resale stock is determined to be available as a remarketed product in step S803, the resale management server device 2 issues a use right transfer request to the electronic content management server device 1 in step S804. In step S805, a use right transfer process is performed. More specifically, in accordance with information about the electronic content to be bought, the sales site, the user, the buying amount, and the currency, a buying history is recorded into the buying history storage unit 109, as in the first-marketed product buying process in step S103 described above with reference to FIG. 27.

In step S806, the electronic content management server device 1 transmits a result of the use right transfer process to the resale management server device 2. In step S807, a remarketed product buying defining process is performed. This process includes recording of a resale history into the resale history storage unit 2045, updating of the stock quantities in the resale stock quantity storage unit 2043, and updating of the information about the licenses stored in the license storage unit 2046.

Here, updating the license storage unit 2046 includes recording of the user ID of the user who bought the remarketed product into the record related to the license to the bought remarketed product, and incrementing the number of times of resale by 1. Alternatively, the record related to the license to the bought remarketed product may be temporarily deleted or invalidated, and a license associated with the content ID of the resold content, the user ID of the user who bought the remarketed product, and the number of times of resale incremented by 1 may be newly issued.

In step S808, a result of the remarketed product buying process is transmitted from the resale management server device 2 to the sales server device 3. In step S809, the sales server device 3 performs a buying amount receiving process. In step S810, a use right giving process is performed in the sales server device 3.

Lastly, in step S811, the user is notified of a result of the remarketed product buying, and the remarketed electronic content buying process comes to an end. The user who has acquired a right to use electronic content in this manner can download the electronic book through the process shown in FIG. 28, and read the electronic book through the process shown in FIG. 29, as in the case of a first-marketed product buying. In a case where the number of times of resale has not reached the upper limit, and the purchase conditions are satisfied, the electronic content bought as a remarketed product can be again put on the market.

As described above, in the electronic content distribution system according to this embodiment, electronic content provided by content providers can be collectively managed by the electronic content management server device 1, and be distributed via sales sites. Thus, each electronic content provider can maintain a large number of marketing channels for electronic content simply by registering the electronic content in the electronic content management server device 1. Also, each sales site operator can handle an enormous number of pieces of electronic content, without taking the trouble of receiving electronic content from a large number of content providers and registering the electronic content with sales sites.

Further, resale products are managed in an integrated manner by the electronic content management server device 1 and the resale management server device 2. Thus, a large number of marketing channels like the ones for first-marketed products can be maintained for resale products. Also, while buying are made via sales sites, content in stock can be resold to users from any sales site. Thus, a user can easily detect desired remarketed electronic content in resale stock. Meanwhile, a content provider can easily recognize and adjust the remarketed product circulation quantities of the electronic content being provided by the content provider.

Also, purchase and resale availability, and purchase and resale prices are automatically calculated in accordance with the circulation quantities and the stock quantities in the electronic content market. Although the market value of electronic content changes with various factors such as the number of days elapsed since the date of release and the popularity among users, appropriate prices can be set without manual adjustment of prices.

Although both the electronic content management server device 1 and the resale management server device 2 are provided in this embodiment, the present invention does not necessarily have this configuration. For example, the respective units and the respective storage units in the electronic content management server device 1 and the resale management server device 2 may be integrated into a single server device. However, where both the electronic content management server device 1 and the resale management server device 2 are provided as in this embodiment, management of electronic content and first-marketed electronic content sale in the electronic content management server device 1 will not be adversely affected even if problems occur in purchases and resale of content being managed by the resale management server device 2.

Also, in this embodiment, first-marketed and remarketed electronic content sale and purchases to and from users using the user terminal devices 4 are conducted via the sales sites provided by the sales server devices 3, at first-marketed product prices presented by the electronic content management server device 1 and resale/purchase prices presented by the resale management server device 2. However, the sales server devices 3 are managed by the managers of the respective sales sites, as described above. Therefore, the managers of the respective sales sites are preferably allowed to change the prices of electronic content to be sold to users via the respective sales sites provided by the sales server devices 3, and the prices to be paid to users when electronic content is purchased from the users via the respective sales sites provided by the sales server devices 3.

**Claims**

1. An electronic content distribution system comprising:

   an electronic content management server device (1);
   a resale management server device (2);
   a plurality of sales server devices (3) each configured to provide a sales site for electronic content; and
   a plurality of user terminal devices (4) to be used by a plurality of users,
   wherein
   the electronic content management server device (1), the resale management server device (2), the sales server devices (3), and the user terminal devices (4) are capable of communication via at least one network,
   the electronic content management server device (1) includes:

   an electronic content storage unit (105) configured to store electronic content;
   a delivery permission storage unit (107) configured to store at least a set of information for identifying the electronic content and information for identifying the sales site permitted to deliver the electronic content, the set of information being stored as a delivery permission given to the sales site for the electronic content;
   a buying history storage unit (109) configured to store a buying history of a user buying the electronic content from the sales site;
   an inventory list synchronization/delivery unit (102) configured to provide a sales server device (3) of the electronic content distribution system with an inventory list in accordance with the delivery permission, the inventory list being a list of the electronic content available for the user from the sales site;
   a buying history management unit (103) configured to create the buying history when there is a buying request from a user terminal device (4) of the electronic content distribution system to the sales server device (3) for the electronic content, and update the buying history when a process is performed to purchase the electronic content from the user; and
   an electronic content delivery unit (104) configured to deliver the electronic content to the user terminal device (4) in accordance with the buying history when there is a delivery request from the user terminal device (4) for the electronic content,

the resale management server device (2) includes:

a resale management information storage unit (204) configured to store information for managing a purchase of the electronic content from the user, and resale of the electronic content to another user;

a price setting information storage unit (205) configured to store information for determining availability of the electronic content to be purchased from the user and a purchase price, and determining availability of the electronic content to be resold to the another user and a resale price;

a price setting unit (201) configured to determine availability of the electronic content to be purchased from the user and a purchase price, and determine availability of the electronic content to be resold to the another user and a resale price;

a purchase processing unit (202) configured to perform a process to purchase the electronic content from the user in accordance with the availability of the electronic content to be purchased from the user and the purchase price determined by the price setting unit (201); and

a resale processing unit (203) configured to perform a process to resell the electronic content to the another user in accordance with the availability of the electronic content to be resold to the another user and the resale price determined by the price setting unit (201),

the resale management information storage unit (204) includes:

a resale history storage unit (2045) configured to store a history of resale of the electronic content to the another user; and

a resale stock quantity storage unit (2043) configured to store a resale stock quantity of the electronic content purchased from the user,

the price setting information storage unit (205) includes:

a purchase condition storage unit (2055) configured to store a purchase base price of each piece of the electronic content;

a resale condition storage unit (2056) configured to store a resale base price of each piece of the electronic content; and

a first coefficient storage unit (2057) configured to store a correspondence relationship between a market circulation quantity and the resale stock quantity of the electronic content, and a first coefficient, and

the price setting unit (201)

calculates the market circulation quantity from the information stored in the buying history storage unit (109) and the resale history storage unit (2045),

determines the first coefficient from the market circulation quantity, the resale stock quantity, and the information stored in the first coefficient storage unit (2057),

calculates the purchase price, using the purchase base price and the first coefficient, and

calculates the resale price, using the resale base price and the first coefficient.

2. The electronic content distribution system according to claim 1, wherein
the price setting information storage unit (205) includes:

a second coefficient storage unit (2052) configured to store a correspondence relationship between market states and a second coefficient, the market states including the number of days elapsed since a date of release of the electronic content, a cumulative first-marketed product circulation quantity indicating a quantity of the electronic content sold as a first-marketed product from the date of release of the electronic content till the current time, a latest first-marketed product circulation quantity indicating a quantity of the electronic content sold as a first-marketed product from a predetermined point of time till the current time, and a latest remarketed product circulation quantity indicating a quantity of the electronic content resold from a predetermined point of time till the current time; and

a third coefficient storage unit (2053) configured to store a correspondence relationship between the market states and a third coefficient, and

the price setting unit (201)

calculates the market states from the information stored in the electronic content storage unit (105), the buying history storage unit (109), and the resale history storage unit (2045),

determines the second coefficient from the market states and the information stored in the second coefficient storage unit (2052),

calculates the purchase price, using the purchase base price, the first coefficient, and the second coefficient,

determines the third coefficient from the market states and the information stored in the third coefficient storage unit (2053), and

calculates the resale price, using the resale base price, the first coefficient, and the third coefficient.

3. The electronic content distribution system according to claim 1 or 2, wherein

the purchase condition storage unit (2055) stores an upper limit purchase price and a lower limit purchase price of each piece of the electronic content,

the resale condition storage unit (2056) stores an upper limit resale price and a lower limit resale price of each of the electronic content, and

the price setting unit (201)

employs the upper limit purchase price as the purchase price when the calculated purchase price is equal to or higher than the upper limit purchase price,

employs the lower limit purchase price as the purchase price when the calculated purchase price is equal to or lower than the lower limit purchase price,

employs the upper limit resale price as the resale price when the calculated resale price is equal to or higher than the upper limit resale price, and

employs the lower limit resale price as the resale price when the calculated resale price is equal to or lower than the lower limit resale price.

4. A method of determining a purchase price of electronic content in an electronic content distribution system that conducts first-marketing of the electronic content to a user, conducts a purchase of the electronic content as resale stock from the user, and conducts remarketing of the resale stock to another user, the method comprising:

a step of calculating a market circulation quantity of the electronic content by referring to a buying history storage unit (109) configured to store a history of the first-marketing, and a resale history storage unit (2045) configured to store a history of the remarketing;

a step of acquiring a resale stock quantity of the electronic content by referring to a resale stock quantity storage unit (2043) configured to store a quantity of the resale stock;

a step of determining a first coefficient in accordance with the market circulation quantity and the resale stock quantity, by referring to a first coefficient storage unit (2057) configured to store a correspondence relationship between the market circulation quantity and the resale stock quantity, and the first coefficient;

a step of acquiring a purchase base price of the electronic content by referring to a purchase condition storage unit (2055) configured to store a purchase base price of each piece of the electronic content; and

a step of calculating a purchase price of the electronic content, using the purchase base price and the first coefficient.

5. The method of determining a purchase price according to claim 4, further comprising:

a step of calculating market states by referring to information stored in an electronic content information storage unit (105) configured to store information including a date of release of the electronic content, the buying history storage unit (109), and the resale history storage unit (2045), the market states including the number of days elapsed since the date of release of the electronic content, a cumulative first-marketed product circulation quantity indicating a quantity of the electronic content sold as a first-marketed product from the date of release of the electronic content till the current time, a latest first-marketed product circulation quantity indicating a quantity of the electronic content sold as a first-marketed product from a predetermined point of time till the current time, and a latest remarketed product circulation quantity indicating a quantity of the electronic content resold from a predetermined point of time till the current time;

a step of determining a second coefficient by referring to a second coefficient storage unit (2052) configured to store a correspondence relationship between the market states and the second coefficient; and

a step of calculating the purchase price, using the purchase base price, the first coefficient, and the second coefficient.

6. The method of determining a purchase price according to claim 4 or 5, wherein

the purchase condition storage unit (2055) stores an upper limit purchase price and a lower limit purchase price of each piece of the electronic content,

when the purchase price calculated from the purchase base price and the first coefficient is equal to or higher than the upper limit purchase price, the upper limit purchase price is employed as the purchase price, and

when the purchase price calculated from the purchase base price and the first coefficient is equal to or lower than the lower limit purchase price, the lower limit purchase price is employed as the purchase price.

**7.** A method of determining a resale price of electronic content in an electronic content distribution system that conducts first-marketing of the electronic content to a user, conducts a purchase of the electronic content as resale stock from the user, and conducts remarketing of the resale stock to another user, the method comprising:

a step of calculating a market circulation quantity of the electronic content by referring to a buying history storage unit (109) configured to store a history of the first-marketing, and a resale history storage unit (2045) configured to store a history of the remarketing;

a step of acquiring a resale stock quantity of the electronic content by referring to a resale stock quantity storage unit (2043) configured to store a quantity of the resale stock;

a step of determining a first coefficient in accordance with the market circulation quantity and the resale stock quantity, by referring to a first coefficient storage unit (2057) configured to store a correspondence relationship between the market circulation quantity and the resale stock quantity, and the first coefficient;

a step of acquiring a resale base price of the electronic content by referring to a resale condition storage unit (2056) configured to store a resale base price of each piece of the electronic content; and

a step of calculating a resale price of the electronic content, using the resale base price and the first coefficient.

**8.** The method of determining a resale price according to claim 7, further comprising:

a step of calculating market states by referring to information stored in an electronic content information storage unit (105) configured to store information including a date of release of the electronic content, the buying history storage unit (109), and the resale history storage unit (2045), the market states including the number of days elapsed since the date of release of the electronic content, a cumulative first-marketed product circulation quantity indicating a quantity of the electronic content sold as a first-marketed product from the date of release of the electronic content till the current time, a latest first-marketed product circulation quantity indicating a quantity of the electronic content sold as a first-marketed product from a predetermined point of time till the current time, and a latest remarketed product circulation quantity indicating a quantity of the electronic content resold from a predetermined point of time till the current time;

a step of determining a third coefficient by referring to a third coefficient storage unit (2053) configured to store a correspondence relationship between the market states and the third coefficient; and

a step of calculating the resale price, using the resale base price, the first coefficient, and the third coefficient.

**9.** The method of determining a resale price according to claim 7 or 8, wherein
the resale condition storage unit (2056) stores an upper limit resale price and a lower limit resale price of each piece of the electronic content,
when the resale price calculated from the resale base price and the first coefficient is equal to or higher than the upper limit resale price, the upper limit resale price is employed as the resale price, and
when the resale price calculated from the resale base price and the first coefficient is equal to or lower than the lower limit resale price, the lower limit resale price is employed as the resale price.

FIG.1

ELECTRONIC CONTENT FILE DELIVERY

FIG.2

1

ELECTRONIC CONTENT
MANAGEMENT SERVER DEVICE

ELECTRONIC CONTENT STORAGE UNIT — 105

101

ELECTRONIC CONTENT
REGISTRATION ACCEPTING UNIT

1011 — CONTENT INFORMATION
INPUT ACCEPTING UNIT

1012 — CONTENT FILE
RECEIVING UNIT

CONTENT INFORMATION
STORAGE UNIT — 1051

CONTENT FILE
STORAGE UNIT — 1052

102 — INVENTORY LIST
SYNCHRONIZATION/
DELIVERY UNIT

SALES SITE INFORMATION
STORAGE UNIT — 106

103 — BUYING HISTORY
MANAGEMENT UNIT

DELIVERY PERMISSION
STORAGE UNIT — 107

104 — ELECTRONIC CONTENT
DELIVERY UNIT

DELIVERY CONDITION
STORAGE UNIT — 108

BUYING HISTORY
STORAGE UNIT — 109

FIG.3

**2**

**RESALE MANAGEMENT SERVER DEVICE**

205 — **PRICE SETTING INFORMATION STORAGE UNIT**

2051 — MARKET STATE CONDITION SETTING STORAGE UNIT

2052 — PURCHASE SCORE STORAGE UNIT

201 — PRICE SETTING UNIT

2053 — RESALE SCORE STORAGE UNIT

202 — PURCHASE PROCESSING UNIT

2054 — PURCHASE/RESALE CONDITION SETTING STORAGE UNIT

2055 — PURCHASE CONDITION STORAGE UNIT

203 — RESALE PROCESSING UNIT

2056 — RESALE CONDITION STORAGE UNIT

2057 — MARKET SCORE STORAGE UNIT

204 — **RESALE MANAGEMENT INFORMATION STORAGE UNIT**

2043 — RESALE STOCK QUANTITY STORAGE UNIT

2041 — RESALE DELIVERY PERMISSION STORAGE UNIT

2044 — PURCHASE HISTORY STORAGE UNIT

2046 — LICENSE STORAGE UNIT

2045 — RESALE HISTORY STORAGE UNIT

2042 — RESALE PRICE STORAGE UNIT

FIG.4

3

**SALES SERVER DEVICE**

301 — | SALES SITE PROVIDING UNIT |

302 — | INVENTORY LIST SYNCHRONIZING/ RECEIVING UNIT |

303 — | FIRST-MARKETED PRODUCT BUYING ACCEPTING UNIT |

304 — | RESALE STOCK CHECKING UNIT |

305 — | REMARKETED-PRODUCT BUYING ACCEPTING UNIT |

306 — | PURCHASE ACCEPTING UNIT |

USER INFORMATION STORAGE UNIT — 307

MERCHANDICE INFORMATION STORAGE UNIT — 308

SITE-BY-SITE BUYING HISTORY STORAGE UNIT — 309

FIG.5

FIG.6

**RESALE MANAGEMENT SERVER**

RESALE MANAGEMENT INFORMATION STORAGE UNIT

**ELECTRONIC CONTENT MANAGEMENT SERVER**

CONTENT INFORMATION
- CONTENT ID
- TITLE
- SALES UNIT
- AUTHOR
- RIGHT HOLDER
- SUBSCRIPTION EXPIRATION DATE
- PHYSICAL MEDIUM RELEASE DATE
- ELECTRONIC VERSION RELEASE DATE
- ELECTRONIC VERSION STANDARD PRICE
- OTHER ATTRIBUTE INFORMATION

SALES SITE
- SITE ID
- SITE NAME
- CONTRACT CONDITIONS
- OTHER ATTRIBUTE INFORMATION

RESALE SETTING
- RESALE PERMISSION ID
- STOCK QUANTITY

RESALE PERMISSION
- RESALE PERMISSION ID
- CONTENT ID
- SITE ID

RESALE PRICE
- RESALE PERMISSION ID
- PURCHASE PRICE
- RESALE PRICE

PURCHASE HISTORY
- RESALE PERMISSION ID
- LICENSE ID
- USER ID
- PURCHASE DATE
- PURCHASE PRICE

LICENSE
- LICENSE ID
- CONTENT ID
- USER ID
- NUMBER OF TIMES OF RESALE

RESALE HISTORY
- RESALE PERMISSION ID
- LICENSE ID
- USER ID
- RESALE DATE
- RESALE PRICE

**RESALE PRICE SETTING INFORMATION STORAGE UNIT**

MARKET STATE PATTERN SETTING
- PATTERN ID
- RIGHT HOLDER ID
- DELIVERY START DATE
- CUMULATIVE FIRST-MARKETED PRODUCT CIRCULATION QUANTITY
- LATEST FIRST-MARKETED PRODUCT CIRCULATION QUANTITY
- LATEST REMARKETED PRODUCT CIRCULATION QUANTITY
- RESALE STOCK QUANTITY
- PURCHASE CONDITION ID
- RESALE CONDITION ID

PURCHASE RESALE CONDITION SETTING
- CONDITION ID
- SITE ID
- RIGHT HOLDER
- CONTENT ID
- AUTHOR

MARKET SCORE
- MARKET PATTERN
- STOCK PATTERN
- MARKET SCORE

PURCHASE SCORE
- PURCHASE SCORE ID
- PURCHASE AVAILABILITY
- PURCHASE SCORE

RESALE SCORE
- RESALE SCORE ID
- RESALE AVAILABILITY
- RESALE SCORE

PURCHASE CONDITION
- CONDITION ID
- BASE PURCHASE PRICE
- LOWER LIMIT PRICE
- UPPER LIMIT PRICE

RESALE CONDITION
- CONDITION ID
- BASE RESALE PRICE
- LOWER LIMIT PRICE
- UPPER LIMIT PRICE

28

FIG.7

| ID | TITLE | SALES UNIT | AUTHOR | RIGHT HOLDER | SUBSCRIPTION EXPIRATION DATE |
|---|---|---|---|---|---|
| 1 | AA | VOLUME 15 | ABC | PUBLISHER A | 2026/12/31 |
| 2 | BBB | VOLUME 6 | D | PUBLISHER A | 2016/9/10 |
| 3 | CC | VOLUME 22 | EF-GH | COMPANY B | 2018/9/30 |
| 4 | BBB | CHAPTER 1 | D | PUBLISHER A | 2016/9/10 |
| 5 | CC | VOLUMES 1 TO 10 | EF-GH | COMPANY B | 2018/9/30 |

| SUBSCRIPTION EXPIRATION DATE | PHYSICAL MEDIUM RELEASE DATE | ELECTRONIC VERSION RELEASE DATE | ELECTRONIC VERSION STANDARD PRICE |
|---|---|---|---|
| 2026/12/31 | 2014/3/4 | 2014/9/4 | ¥450 |
| 2016/9/10 | 2015/4/4 | 2015/4/4 | ¥450 |
| 2018/9/30 | 2016/10/1 | 2016/10/1 | ¥450 |
| 2016/9/10 | 2014/9/10 | 2015/9/24 | ¥50 |
| 2018/9/30 | 2014/9/30 | 2014/9/30 | ¥1000 |

FIG.8

| ID | SITE | URL | CONTRACT CONDITIONS | |
|----|------|-----|---------------------|---|
| 1 | ELECTRONIC BOOKSTORE A | http://www.example1.com/ | FOR CELL PHONE | ⋯ |
| 2 | WEB COMIC BOOK STORE B | http://www.example2.com/ | FOR PC | |

⋮

FIG.9

| ID | CONTENT ID | SITE ID |
|----|-----------|---------|
| 1  | 1         | 1       |
| 2  | 2         | 1       |
| 3  | 2         | 2       |
| 4  | 3         | 1       |

...

:

FIG.10

| ID | PERMISSION ID | PERMISSION START DATE AND TIME | PERMISSION END DATE AND TIME | DELIVERY PRICE | CURRENCY |
|----|----|----|----|----|----|
| 1 | 1 | 2016/2/1 | 2016/4/30 | 250 | YEN |
| 2 | 1 | 2016/5/1 | 2016/8/31 | 200 | YEN |
| 3 | 2 | 2016/3/15 | 2016/9/10 | 250 | YEN |
| 4 | 3 | 2016/2/1 | 2016/8/1 | 2.00 | US DOLLAR |
| 5 | 4 | 2016/3/1 | 2016/8/1 | 200 | YEN |

⋯

⋮

FIG.11

| ID | VOLUME NO | TITLE | AUTHOR | RIGHT HOLDER | SUBSCRIPTION EXPIRATION DATE |
|----|-----------|-------|--------|--------------|------------------------------|
| 1 | 15 | AA | ABC | PUBLISHER A | 2026/12/31 |
| 2 | 6 | BBB | D | PUBLISHER A | 2016/9/10 |
| 3 | 22 | CC | EF-GH | COMPANY B | 2018/9/30 |

:

| PERMISSION START DATE AND TIME | PERMISSION END DATE AND TIME | DELIVERY PRICE | CURRENCY |
|-------------------------------|-----------------------------|----------------|----------|
| 2016/2/1 | 2016/4/30 | 250 | YEN |
| 2016/3/15 | 2016/9/10 | 250 | YEN |
| 2016/3/1 | 2016/8/1 | 200 | YEN |

...

:

FIG.12

| ID | CONTENT ID | SITE ID | USER ID | BUYING AMOUNT | CURRENCY |
|---|---|---|---|---|---|
| X0001 | 1 | 1 | AAAA | 250 | YEN |
| X0002 | 3 | 1 | AAAA | 200 | YEN |
| X0003 | 1 | 1 | BBBB | 250 | YEN |

| BUYING DATE AND TIME | SUBSCRIPTION EXPIRATION DATE |
|---|---|
| 2016/4/5 18:21 | 2026/12/31 |
| 2016/4/6 12:30 | 2018/9/30 |
| 2016/4/10 11:03 | 2026/12/31 |

FIG.13

| ID | MAIL ADDRESS | REMAINING POINTS | LAST ACCESS DATE AND TIME | |
|---|---|---|---|---|
| AAAA | test@aaa.com | 500 | 2016/4/5 18:21 | |
| BBBB | test@bbb.com | 300 | 2016/4/6 12:30 | ... |
| CCCC | test@ccc.com | 0 | 2016/4/10 11:03 | |

⋮

FIG.14

| RESALE PERMISSION ID | CONTENT ID | SITE ID | |
|---|---|---|---|
| 31 | 1 | 1 | ... |
| 32 | 2 | 1 | |

FIG.15

| ID | RESALE PERMISSION ID | PURCHASE PRICE | RESALE PRICE | |
|----|----|----|----|----|
| 41 | 31 | ¥75 | ¥325 | ... |
| 42 | 32 | ¥80 | ¥350 | |

FIG.16

| RESALE PERMISSION ID | STOCK QUANTITY |
|:---:|:---:|
| 31 | 10 |
| 32 | 5 |

FIG.17

| ID | RESALE PERMISSION ID | LICENSE ID | USER ID | PURCHASE DATE | PURCHASE PRICE |
|----|----------------------|------------|---------|---------------|----------------|
| 1 | 31 | 1 | AAAA | 2016/10/5 | ¥75 |
| 2 | 32 | 2 | BBBB | 2016/11/20 | ¥80 |

...

FIG.18

| ID | RESALE PERMISSION ID | LICENSE ID | USER ID | RESALE DATE | RESALE PRICE | |
|----|----------------------|------------|---------|-------------|--------------|----|
| 1 | 31 | 1 | AAAA | 2016／11／25 | ¥325 | ... |
| 2 | 32 | 2 | BBBB | 2016／12／25 | ¥350 | |

FIG.19

| ID | CONTENT ID | USER ID | NUMBER OF TIMES OF RESALE |
|----|------------|---------|---------------------------|
| 1  | 1          | AAAA    | 2                         |
| 2  | 2          | BBBB    | 1                         |

...

⋮

FIG.20

| ID | NUMBER OF DAYS SINCE RELEASE | CUMULATIVE FIRST-MARKETED PRODUCT CIRCULATION QUANTITY | LATEST FIRST-MARKETED PRODUCT CIRCULATION QUANTITY | LATEST REMARKETED PRODUCT CIRCULATION QUANTITY | PURCHASE SCORE ID | RESALE SCORE ID |
|----|------|------|------|------|----|----|
| 61 | SMALL | SMALL | SMALL | SMALL | 71 | 81 |
| 62 | SMALL | LARGE | LARGE | SMALL | 72 | 82 |

...

⋮

FIG.21

| ID | PURCHASE AVAILABILITY | PURCHASE SCORE |
|----|----------------------|----------------|
| 71 | NOT AVAILABLE | 0 |
| 72 | AVAILABLE | 5 |

...

⋮

FIG.22

| ID | RESALE AVAILABILITY | RESALE SCORE |
|----|---------------------|--------------|
| 71 | NOT AVAILABLE | 0 |
| 72 | AVAILABLE | 3 |

...

FIG.23

| ID | SITE ID | RIGHT HOLDER | CONTENT ID | AUTHOR | |
|----|---------|--------------|------------|--------|---|
| 51 | | PUBLISHER A | | | |
| 52 | | PUBLISHER A | 2 | | ... |
| 53 | 2 | | | | |
| 54 | 2 | | | EF-GH | |

FIG.24

| CONDITION ID | BASE PRICE | LOWER LIMIT PRICE | UPPER LIMIT PRICE |
|---|---|---|---|
| 51 | ¥100 | ¥50 | ¥150 |
| 52 | ¥100 | ¥75 | ¥200 |

...

FIG.25

| CONDITION ID | BASE PRICE | LOWER LIMIT PRICE | UPPER LIMIT PRICE | |
|---|---|---|---|---|
| 51 | ¥350 | ¥200 | ¥400 | ... |
| 52 | ¥350 | ¥225 | ¥450 | |

FIG.26

| MARKET PATTERN | STOCK PATTERN | MARKET SCORE |
|---|---|---|
| LARGE CIRCULATION | SMALL | 3 |
| LARGE CIRCULATION | NORMAL | 5 |
| SMALL CIRCULATION | LARGE | 2 |

· · ·

FIG.27

USER TERMINAL DEVICE

SALES SERVER DEVICE

ELECTRONIC CONTENT MANAGEMENT SERVER DEVICE

FIRST-MARKETED PRODUCT BUYING REQUEST (S101)

FIRST-MARKETED PRODUCT BUYING PROCESS REQUEST (S102)

FIRST-MARKETED PRODUCT BUYING PROCESS (S103)

FIRST-MARKETED PRODUCT BUYING RETURN (S104)

FIRST-MARKETED PRODUCT BUYING RECORDING (S105)

FIRST-MARKETED PRODUCT BUYING RESULT NOTIFICATION (S106)

FIG.28

```
┌──────────────┐    ┌──────────────┐    ┌──────────────┐
│USER TERMINAL │    │SALES SERVER  │    │  ELECTRONIC  │
│   DEVICE     │    │   DEVICE     │    │   CONTENT    │
│              │    │              │    │ MANAGEMENT   │
│              │    │              │    │SERVER DEVICE │
└──────────────┘    └──────────────┘    └──────────────┘
```

DL PAGE REQUEST
(S201)

BUYING HISTORY
SEARCH (S202)

DL URL REQUEST
(S203)

DL URL NOTIFICATION
(S204)

DL PAGE SUPPLY
(S205)

APPLICATION
START (S206)

LOGIN REQUEST
(S207)

LOGIN
AUTHENTICATION
(S208)

LOGIN RESULT
RETURN (S209)

DL REQUEST
(S210)

DL RETURN
(S211)

LICENSE REQUEST
(S212)

LICENSE RETURN
(S213)

DL COMPLETION
NOTIFICATION
(S214)

50

FIG.29

USER TERMINAL DEVICE

SALES SERVER DEVICE

ELECTRONIC CONTENT MANAGEMENT SERVER DEVICE

CONTENT USE INSTRUCTION ACCEPTANCE (S301)

LOGIN REQUEST (S302)

LOGIN AUTHENTICATION (S303)

LOGIN AUTHENTICATION RESULT RETURN (S304)

LICENSE AUTHENTICATION REQUEST (S305)

LICENSE AUTHENTICATION (S306)

LICENSE AUTHENTICATION RESULT RETURN (S307)

CONTENT USE START (S308)

FIG.30

FIG.31

```
                    ┌──────────────┐
                    │    START     │
                    └──────┬───────┘
                           │
                    ┌──────┴───────┐
                    │   ACQUIRE    ├── S501
                    │PURCHASE SCORE│
                    └──────┬───────┘
                           │
                        ╱──┴──╲  S502
           NO      ╱     IS     ╲
        ◄─────────     PURCHASE
                    ╲  POSSIBLE? ╱
                        ╲──┬──╱
                         YES
                           │
                    ┌──────┴───────┐
                    │ACQUIRE NUMBER OF├── S504
                    │ RESALE TIMES │
                    └──────┬───────┘
                           │
                        ╱──┴──╲  S505
           NO      ╱      IS     ╲
        ◄────── NUMBER OF RESALE
              TIMES EQUAL TO OR SMALLER
                ╲ THAN THRESHOLD VALUE? ╱
                        ╲──┬──╱
                         YES    S506
                           │
                    ┌──────┴───────┐
                    │ACQUIRE BASE, LOWER│
                    │LIMIT, AND UPPER LIMIT│
                    │PURCHASE PRICES│
                    └──────┬───────┘
                           │
                    ┌──────┴───────┐
                    │   ACQUIRE    │
                    │ MARKET SCORE │
                    └──────────────┘
                  S507
```

ACQUIRE ELECTRONIC VERSION STANDARD PRICE — S508

CALCULATE PURCHASE PRICE — S509

IS PURCHASE PRICE EQUAL TO OR LOWER THAN LOWER LIMIT PRICE? — S510

YES → SET LOWER LIMIT PRICE AS PURCHASE PRICE — S511

NO

IS PURCHASE PRICE EQUAL TO OR HIGHER THAN UPPER LIMIT PRICE? — S512

YES → SET UPPER LIMIT PRICE AS PURCHASE PRICE — S513

NO

RETURN PURCHASE PRICE — S514

NOTIFY THAT PURCHASE IS NOT POSSIBLE — S503

END

53

FIG.32

FIG.33

```
                        ┌──────────────────┐
                        │      START       │
                        └──────────────────┘
                                 │
                        ┌──────────────────┐
                        │    ACQUIRE       │──S701
                        │  RESALE SCORE    │
                        └──────────────────┘
                                 │
                              S702
                         ╱╲
          NO        ╱           ╲
      ◄─────────── ╱  IS RESALE   ╲
      │            ╲  POSSIBLE?   ╱
      │             ╲           ╱
      │               ╲╱
      │                │ YES
      │       ┌──────────────────┐
      │       │ ACQUIRE NUMBER   │──S704
      │       │ OF RESALE TIMES  │
      │       └──────────────────┘
      │                │
      │             S705
      │            ╱╲
      │   NO     ╱  IS   ╲
      │ ◄───────╱ NUMBER OF╲
      │         ╲RESALE TIMES EQUAL╱              ┌──────────────────┐
      │         ╲TO OR SMALLER THAN╱              │    ACQUIRE       │──S708
      │          ╲THRESHOLD╱        ┌─────────────│ ELECTRONIC VERSION│
      │           ╲VALUE?╱          │             │  STANDARD PRICE  │
      │             ╲╱              │             └──────────────────┘
      │              │ YES   S706   │                      │
      │       ┌──────────────────┐  │             ┌──────────────────┐
      │       │ACQUIRE BASE, LOWER│  │             │   CALCULATE      │──S709
      │       │LIMIT, AND UPPER LIMIT            │   RESALE PRICE   │
      │       │  RESALE PRICES   │  │             └──────────────────┘
      │       └──────────────────┘  │                      │
      │                │            │                   S710
      │       ┌──────────────────┐  │                  ╱╲                        S711
      │       │    ACQUIRE       │  │            ╱  IS   ╲  YES    ┌──────────────────┐
      │       │  MARKET SCORE    │──┘           ╱RESALE PRICE╲────►│ SET LOWER LIMIT  │
      │       └──────────────────┘             ╲EQUAL TO OR LOWER╱  │ PRICE AS RESALE  │
      │        S707                             ╲THAN LOWER LIMIT╱   │     PRICE        │
      │                                          ╲PRICE?╱            └──────────────────┘
      │                                            ╲╱                        │
      │                                             │ NO                     │
      │                                          S712                        │
      │                                            ╱╲                   S713 │
      │                                      ╱  IS   ╲  YES   ┌──────────────┐
      │                                     ╱RESALE PRICE╲───►│SET UPPER LIMIT│
      │                                     ╲EQUAL TO OR HIGHER│PRICE AS RESALE│
      │                                     ╲THAN UPPER LIMIT╱ │   PRICE       │
      │                                      ╲PRICE?╱          └──────────────┘
      │                                        ╲╱                     │
      │                                         │ NO                  │
      │                              ┌──────────────────┐◄────────────┘
      │              S703            │    RETURN        │──S714
      │  ┌──────────────────┐        │  RESALE PRICE    │
      └─►│ NOTIFY THAT RESALE│       └──────────────────┘
         │ IS NOT POSSIBLE  │───────────────►│
         └──────────────────┘         ┌──────────────────┐
                                      │       END        │
                                      └──────────────────┘
```

FIG.34

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/058147 A1 (ROH HAK-GYUN [KR]) 26 February 2015 (2015-02-26) * paragraph [0019] - paragraph [0085] * ----- | 1-9 | INV. G06Q30/06 |
| X | US 2012/303491 A1 (HILL PETER F [US] ET AL) 29 November 2012 (2012-11-29) * abstract * ----- | 1-9 | |

TECHNICAL FIELDS
SEARCHED        (IPC)

G06Q

The present search report has been drawn up for all claims

| Place of search | Date of completion of the search | Examiner |
|---|---|---|
| The Hague | 23 March 2018 | Pomocka, Marek |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...................................................................................

& : member of the same patent family, corresponding document

EPO FORM 1503 03.82 (P04C01)

## EP 3 343 493 A1

### ANNEX TO THE EUROPEAN SEARCH REPORT
### ON EUROPEAN PATENT APPLICATION NO.

EP 17 19 6274

This annex lists the patent family members relating to the patent documents cited in the above-mentioned European search report.
The members are as contained in the European Patent Office EDP file on
The European Patent Office is in no way liable for these particulars which are merely given for the purpose of information.

23-03-2018

| Patent document cited in search report | | | Publication date | Patent family member(s) | | | Publication date |
|---|---|---|---|---|---|---|---|
| US 2015058147 | A1 | | 26-02-2015 | KR | 20150023978 | A | 06-03-2015 |
| | | | | US | 2015058147 | A1 | 26-02-2015 |
| US 2012303491 | A1 | | 29-11-2012 | CA | 2837161 | A1 | 29-11-2012 |
| | | | | CN | 103562947 | A | 05-02-2014 |
| | | | | EP | 2715641 | A1 | 09-04-2014 |
| | | | | JP | 5791790 | B2 | 07-10-2015 |
| | | | | JP | 2014517972 | A | 24-07-2014 |
| | | | | US | 2012303491 | A1 | 29-11-2012 |
| | | | | WO | 2012162432 | A1 | 29-11-2012 |

EPO FORM P0459

For more details about this annex : see Official Journal of the European Patent Office, No. 12/82

**REFERENCES CITED IN THE DESCRIPTION**

**Patent documents cited in the description**

- JP 2014517972 A
- JP 2013532329 A
- JP 2014120069 A
- JP 2013008165 A